# EUROPEAN PATENT SPECIFICATION

(11) **EP 2 984 510 B1**
(45) Date of publication and mention of the grant of the patent: **29.05.2019**
(21) Application number: 14721681.6
(22) Date of filing: 26.03.2014
(51) Int. Cl.: G02B 6/25, B26F 3/00, C03B 37/16

(54) **LOW COST, DISPOSABLE OPTICAL FIBER CLEAVER AND A METHOD TO CLEAVE AN OPTICAL FIBER**
KOSTENGÜNSTIGER EINWEGGLASFASERSPALTER UND VERFAHREN ZUM SPALTEN EINER OPTISCHEN FASER
COUPE-FIBRE OPTIQUE JETABLE DE FAIBLE COÛT ET PROCÉDÉ PERMETTANT DE COUPER UNE FIBRE OPTIQUE

(30) Priority: 08.04.2013 US 201361809666 P; 30.09.2013 US 201361884502 P
(43) Date of publication of application: 17.02.2016
(73) Proprietor: Corning Research & Development Corporation, Corning, New York 14831 (US)
(72) Inventor: LURIE, Edward B., Saint Paul, Minnesota 55133-3427 (US); ALLEN, William G., Saint Paul, Minnesota 55133-3427 (US); THOMPSON, Zachary M., Saint Paul, Minnesota 55133-3427 (US); HENDERSON, Daniel H., Saint Paul, Minnesota 55133-3427 (US); PEPIN, Ronald P., Saint Paul, Minnesota 55133-3427 (US); GONZALEZ, David, Saint Paul, Minnesota 55133-3427 (US); HEINZ, Viktor, 41453 Neuss (DE)
(74) Representative: Epping - Hermann - Fischer
(86) International application number: PCT/US2014/031842
(87) International publication number: WO 2014/168758

(56) References cited:
- WO-A2-2010/120570
- WO-A2-2011/025929
- US-A1- 2011 204 117

## Description

### BACKGROUND OF THE INVENTION

### Field of the Invention

The present invention is directed to a device for cleaving an optical fiber, in particular, the exemplary device bends the optical fiber over a radiused surface of a mandrel and tensions the optical fiber prior to cleaving.

### Background

WO 2010/120570 A2 discloses a bladeless optical fiber cleaver including a first clamp and a second clamp coupled to each other via a generally support tray, where the second clamp is movable with respect to the first clamp along an axis of the optical fiber. The first and second clamps each receive a portion of the optical fiber. The fiber cleaver includes a mechanism to create a tension force in a stripped portion of the optical fiber, where the stripped portion of the fiber under tension is exposed to receive contact from a flexible abrasive material, the flexible abrasive material introducing a flaw in the optical fiber where the cleave takes place.

WO 2011/025929 A2 discloses an optical fiber cleaver to cleave an optical fiber. The optical fiber cleaver comprises a generally planar main body and a generally planar flap portion movable with respect to the main body. The optical fiber cleaver also includes a first clamp disposed on the main body to receive and hold a first bare glass portion of the optical fiber and a second clamp disposed on the flap portion to receive and hold a second bare glass portion of the optical fiber.

US 2011/204117 A1 discloses methods, cleavers, and packagings for cleaving an optical fiber using an abrasive medium. In one embodiment, the bladeless cleaver includes a body having a flexible tongue configured to receive an optical fiber. The flexible tongue is further configured to provide an arcuate surface to bend a portion of the optical fiber. The bladeless cleaver in this embodiment also includes a cleaver structure attached to the body that comprises an abrasive medium carrier configured to support an abrasive medium. The abrasive medium carrier is configured to be actuated to place the abrasive medium in contact with the portion of the optical fiber to create a flaw in the portion of the optical fiber.

In the area of optical telecommunication networks, it is often necessary to connect an optical fiber to another. Conventional connections include fusion splices, mechanical splices and plug/unplug-type connections. Oftentimes it is necessary to perform connections in a field environment. When making such connections in the field, it may be necessary to cleave an optical fiber in order to create a controlled angled end face as part of the optical fiber preparation process.

Current portable optical fiber cleavers are expensive, precision mechanisms that typically include two main features. First, conventional cleavers have a mechanism for placing a controlled strain on the optical fiber, through tension, bending, torsion or a combination of tension, bending, and torsion. Second, conventional cleavers have a rigid blade, typically made from carbide or another hard material, for creating a flaw on the surface of the optical fiber. These blades can add significant cost, and in many cases, may require regular maintenance. Also, with a rigid blade, care must be taken not to damage the optical fiber as it is possible for the blade to impact the optical fiber with too much force or to create too deep of a flaw, so the tolerances of these cleavers must be tightly controlled which can contribute to their higher cost. Some conventional fiber cleavers are described in U.S. Pat Nos. 6,634,079; 6,628,879; and 4,790,465. Another conventional cleaver is described in U.S. Pat. No. 8,254,739. Laser cleavers are also known and are utilized primarily in a factory or other controlled environment.

Wheel type, rigid blade cleavers can produce reliable cleaves (i.e. cleave angles vary by < 1°). However, due to the cost ($500-$1000 each) for these cleavers and their fragility, they are not well suited for inclusion in the toolbox of every field installer. One lower cost alternative is a beaver tail cleaver which can cost from $185-$350. While the beaver tail cleavers are more affordable than the wheel type, rigid blade cleavers, they typically produce more inconsistent cleaves (i.e. cleave angles can vary by up to about 4°), which may not be suitable for use with all styles of field installed connectors and splices. In addition, field installers do not have an economical way to measure cleave angles in the field, and are therefore blind to inconsistent cleave results which can be intrinsic to the cleave being used or may be a result of wear on the cleaver. Thus, there is a need for a low cost disposable cleaver that can provide consistent cleaves during its lifetime.

### SUMMARY

The present invention provides a device to cleave an optical fiber according to claim 1. Further embodiments are disclosed in the dependent claims.

According to an exemplary embodiment of the present invention, a device to cleave an optical fiber is provided. The device includes a base and a cover that is rotatably connected to the base. The base has a work surface and a mandrel disposed in the base that extends above the work surface. The optical fiber is bent over a radiused surface of the mandrel prior to cleaving. A shuttle is disposed in the cover over the mandrel, wherein the shuttle includes a flexible abrasive material that is configured to contact the optical fiber and create a flaw on a top surface of the optical fiber to initiate a crack in the optical fiber.

The device includes a first clamp disposed on one side of the mandrel and a second clamp disposed on the opposite side of the mandrel to provide a holding force to the optical fiber so that it will not slip during the cleaving process. In an aspect of the invention, first and second fiber tensioners extending from an inside surface of the cover are disposed between the first and second clamps, respectively.

Positioning the optical fiber over the mandrel exerts bending forces on the optical fiber such that a top surface of the optical fiber is under tension and a bottom surface of the optical fiber is in compression. The fiber tensioners exert a downward force on the top surface of the optical fiber on either side of the mandrel resulting in a static axial tension within the optical fiber.

In an exemplary aspect, the flexible abrasive material is an abrasive coated wire that is attached to the shuttle at two points such that the abrasive coated wire can have either a curved or straight configuration. The device is configured such that the abrasive coated wire contacts the top of the optical fiber at a contact tangent angle of less than about 30°.

Furthermore, a cleaving method is provided. An end of an optical fiber is stripped to reveal a bare glass portion of the optical fiber. The stripped end of the optical fiber is placed in a cleaving device such that a buffer coated portion of the optical fiber is disposed on a clamping surface in a first clamp and the bare glass portion of the optical fiber is disposed on a clamping surface in a second clamp. The first clamp is actuated to secure the buffer coated portion of the optical fiber in the cleaving device. Next, a cover of the cleaving device is closed to actuate the second clamp, securing the bare glass portion of the optical fiber in the cleaving device. The bare glass portion of the optical fiber is bent over a mandrel disposed between the first clamp and the second clamp and a tension force is applied. A shuttle carrying a piece of a flexible abrasive is disposed in a slot in the cover. Sliding the shuttle in the slot, such that the flexible abrasive material contacts a top surface of the bare portion of the optical fiber creates a flaw that propagates through the optical fiber to produce a cleaved end.

The above summary of the present invention is not intended to describe each illustrated embodiment or every implementation of the present invention. The figures and the detailed description that follows more particularly exemplify these embodiments.

### BRIEF DESCRIPTION OF THE DRAWINGS

The present invention will be farther described with reference to the accompanying drawings, wherein:
Figs. 1A-1C show three views of an optical fiber cleaving device according to an aspect of the invention.
Fig. 2 shows an isometric view of a work surface of a base of an optical fiber cleaving device according to an aspect of the invention.
Fig. 3 shows an isometric view of an inside surface of a cover of an optical fiber cleaving device according to an aspect of the invention.
Figs. 4A-4E show five views of a shuttle of an optical fiber cleaving device according to an aspect of the invention.
Fig. 5 shows a preferred contact zone for the flexible abrasive to contact the optical fiber according to an aspect of the invention.
Fig. 6A-6B are two side views showing the cleaving of an optical fiber with an optical fiber cleaving device according to an aspect of the invention.
Fig. 7A-7E illustrate an exemplary cleaving process utilizing an optical fiber cleaving device according to an aspect of the invention.
Fig. 8A-8B are two cross-sectional views showing details of one of the steps in the exemplary cleaving process of Figs. 7A-7E.
Fig. 9 is a cross-sectional view of an alternative embodiment of an optical fiber cleaving device according to an aspect of the invention.
Fig. 10 is another alternative embodiment of an optical fiber cleaving device according to an aspect of the invention.
Fig. 11 is a detail view of the cleaving device of Fig. 10.
Figs. 12A-12C are three views of another alternative embodiment of an optical fiber cleaving device according to an aspect of the invention.
Fig 13A is a view of an insert usable with the optical fiber cleaving device of Fig. 12A.
Fig 13B is a view of an holder adapter usable with the optical fiber cleaving device of Fig. 12C.
Fig. 14A is a view of the optical fiber cleaving device of Fig. 12C with an exemplary fiber holder assembly.
Figs. 14B-14C are two views of the optical fiber cleaving device of Fig. 12C with holder adapter.
Fig. 15 is a view of an exemplary fiber holder assembly usable with the cleaver shown in Fig. 12C.
Fig. 16A-16B are two views of another exemplary fiber holder assembly usable with the cleaver shown in Fig. 12C.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

### DETAILED DESCRIPTION OF THE EMBODIMENTS

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "forward," "trailing," etc., is used with reference to the orientation of the Figure(s) being described. Because components of embodiments of the present invention can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

Conventional wheel type, rigid blade cleavers utilize a nick first, then bend and tension the optical fiber process requiring that the dimensions of the device be tightly controlled to satisfy the critical nick/flaw depth and precision tensioning used to cleave the optical fiber. In order to meet these tight dimensional requirements, the work surfaces and control mechanisms require precision machining which is one reason why this type of cleaver is so expensive. Similarly, for conventional cleavers which rely on straight fiber tension alone to propagate a crack through an optical fiber, the nick depth and energy required to initiate a cleave is critical, and the minimum amount of fiber tension needed to initiate a crack is relatively high at 1.78 N to 2.22 N (185 g_{f} to 227 g_{f} (0.4 lb_{f} to 0.5 lb_{f})). In addition this type of cleaver has a small process window because too high a fiber tension force results in a rough (hackled) surface, and too low a fiber tension force results in an irregular, angled cleave due to roll-off or other defects. Finally, the fiber clamping forces which are applied perpendicular to the optical fiber that are required to maintain sufficient fiber tension force need to be greater than 4.45 N (454 g_{f} (1 lb_{f})). In order to apply this level of force, rigid clamping materials (such as aluminum) are required. However, micro-fragments of the glass fiber can become imbedded into the clamp surface as a result of the high clamping force which can cause broken fibers in subsequent cleaves.

In contrast, the present invention is directed to a bladeless apparatus for cleaving an optical fiber in a simple and inexpensive manner that is suitable for field operations. The cleaver embodiments described herein can be utilized with field terminable connectors, mechanical splices, or fusion splice devices. In particular, the exemplary optical fiber cleaver described herein can use a flexible abrasive material to create the flaw in a contact zone on a top surface of the optical fiber by utilizing a cylindrical radius support or mandrel underneath the optical fiber in combination with either static or dynamic tension in order to greatly reduce fiber clamping forces and significantly reduce the mechanical complexity and precision tolerances of the device. Optimization of the radius on the mandrel and tension ranges further eliminates the need for precision high force fiber clamps and ultra precise cutting blades, and enable the relaxation of mechanical design tolerances required in today's state of the art optical fiber cleavers. The simplified bend and tension optical fiber cleaving device described herein can reliably produce 90° ± 3° cleaves at a significantly lower cost than existing cleavers.

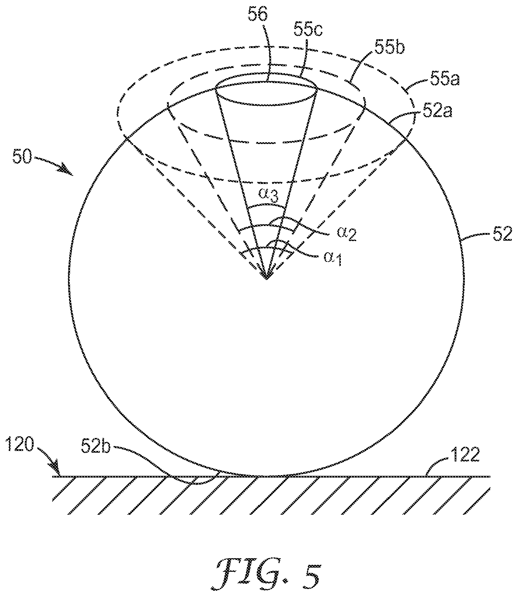

By bending the optical fiber over a mandrel, the bottom surface 52b of the optical fiber is in compression and the top surface 52a of the optical fiber opposite the bottom surface is in tension (see Fig. 5). The size of the mandrel (radius) establishes the tension/compression forces on the outside surfaces of the optical fiber. When a flaw is introduced to the top outside surface of the optical fiber, the optical fiber will break extremely easily. A crack will propagate from the flaw towards center of the optical fiber until it passes through a neutral stress boundary within the optical fiber. As the crack continues through the compressive stress region, the crack can deviate from the initial propagation path creating irregular cleaves including roll-off and lip surfaces on opposing sides of the cleaved fiber. To overcome these irregularities, an additional tensile force is applied to move the neutral stress boundary closer to the surface under compression (e.g. bottom surface 52b). When a sufficient tensile force is applied, the compressive stress region can be reduced, or in other words pushed outside of the optical fiber. Thus, the optical fiber is essentially in tension through its entire cross-section, which will allow the crack created by the exemplary device to propagate in a straighter, more controlled manner.

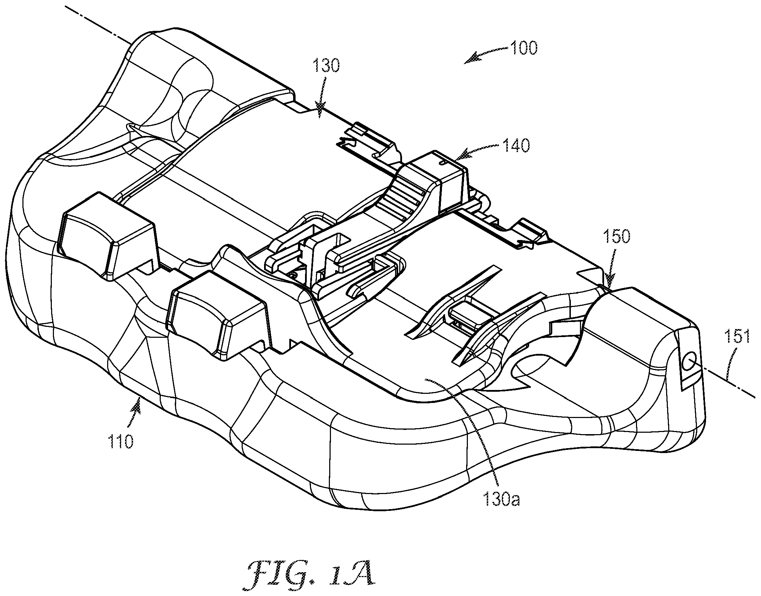

An exemplary device 100 for cleaving optical fibers is shown in Figs. 1A-1C. Device 100 is a bladeless, portable fiber cleaving device that provides suitable tension to permit cleaving of a conventional optical fiber through use of a flexible abrasive material 160 rather than the use of a conventional rigid blade, such as a circular ceramic or tungsten carbide blade. Device 100 includes a base 110 and a cover 130 rotatably connected to the base by a hinge 150, wherein the hinge defines a hinge axis 151. The base can include a work surface defining a reference plane for the device. The cover 130 includes an inside surface 130a that is disposed opposite the base's work surface when the device is in a closed configuration such as is shown in Fig. 1A. A mandrel 120 is disposed within the base and a shuttle 140 that holds a flexible abrasive material 160 is disposed in the cover such that it is positioned over the mandrel when the device is in a closed configuration. The flexible abrasive material 160 is configured to contact the optical fiber and create a flaw or nick in a contact zone on a top surface of the optical fiber to initiate a crack which when it propagates through the optical fiber cleaves the optical fiber into two pieces.

Fig. 5 illustrates the contact zone 55a-c on a bare glass portion 52 of an optical fiber 50 where the flexible abrasive material contacts the optical fiber. The exemplary cleaving device described herein is configured to strike the top surface 52a of the bare glass portion of the optical fiber within a 45° angle (α₁) of the apex 56 of the optical fiber when the bottom surface 52b of the bare glass portion is contacting the radiused surface 122 of mandrel 120. Thus, the contact zone 55a can be defined as the top surface of the bare glass portion of the optical fiber disposed within 45° of the apex of the optical fiber. In a preferred aspect, the contact zone 55b can be defined as the top surface of the bare glass portion of the optical fiber disposed within 30° (α₂) of the apex of the optical fiber and in a more preferred aspect, the contact zone 55c can be defined as the top surface of the bare glass portion of the optical fiber disposed within 15° (α₃) of the apex of the optical fiber.

In an exemplary aspect, hinge 150 comprises a plurality of knuckles or barrels 152a, 152b disposed on the cover and the base, respectively, and a hinge pin 155 configured to pass through a bore 153a, 153b extending through knuckles or barrels 152a, 152b, respectively. The knuckles 152a, 152b of the cover base are aligned such that they adopt an alternating arrangement when disposed on the hinge pin. The central axis of the hinge pin defines the hinge axis 151. In an alternative aspect, hinge 150 can comprise solid barrel portions on the cover and the base, wherein each of the barrel portions has a peg extending from one end of the barrel and a counterbore disposed on the opposite end of the barrel, such that when the barrels of the base and cover are arranged in alternating order, each peg of a base barrel fits into the counterbore in a cover barrel and each peg on a cover barrel fits into a base barrel counterbore. The intermating pegs and counterbores permit the cover to be rotated open and closed around a hinge axis defined by the central axis of the pegs and counterbores.

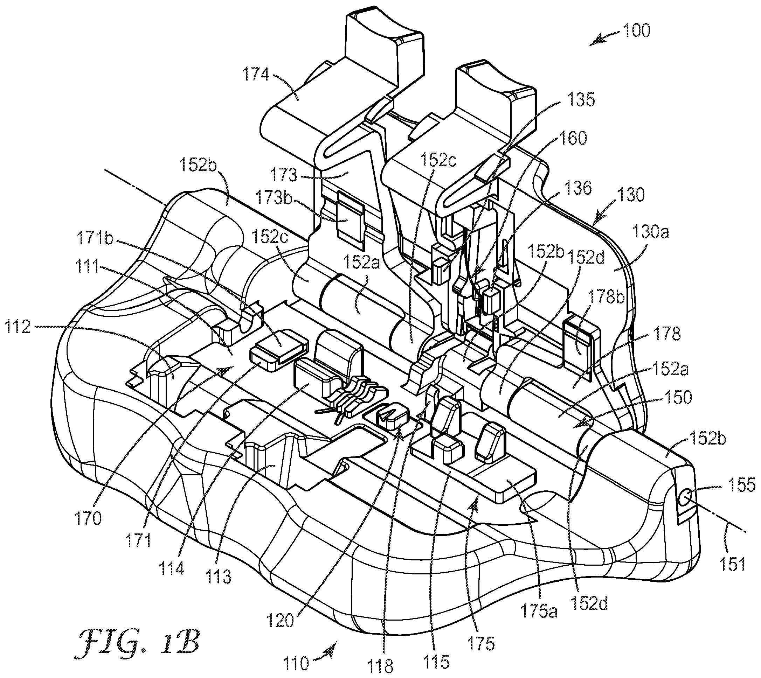

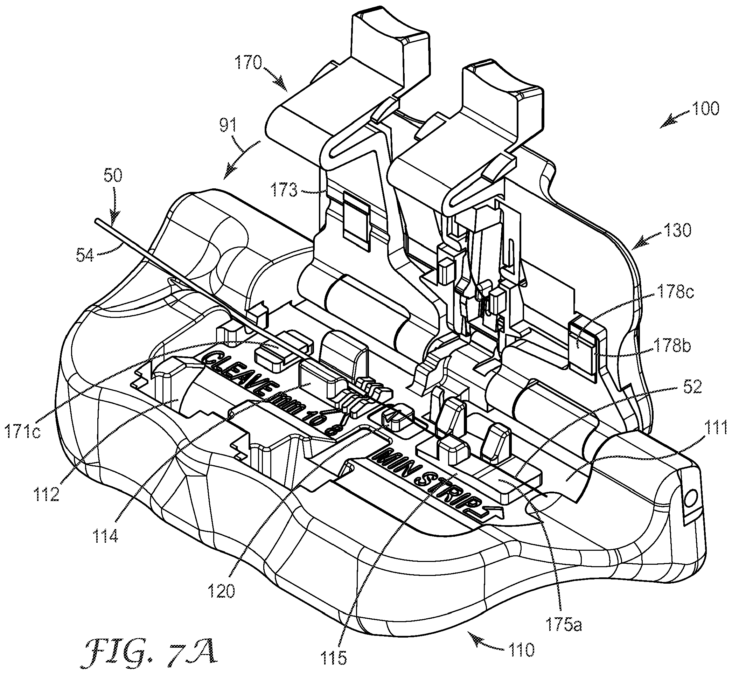

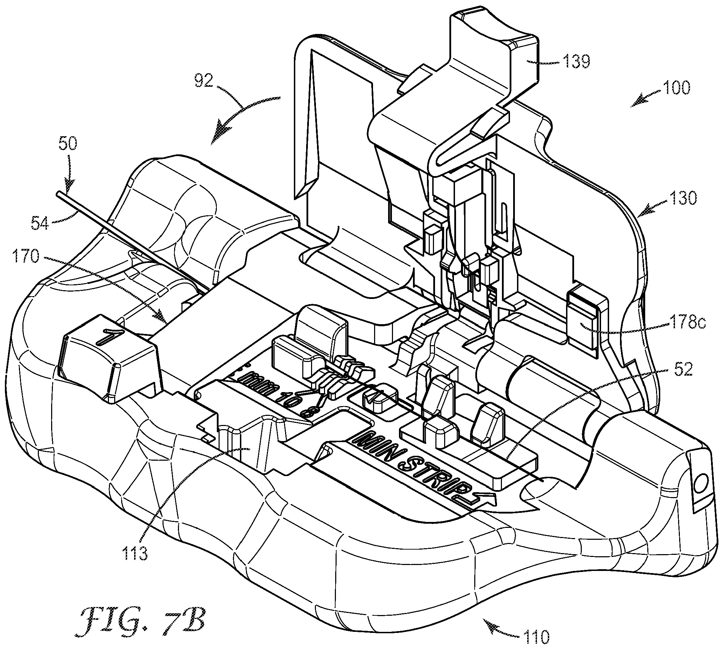

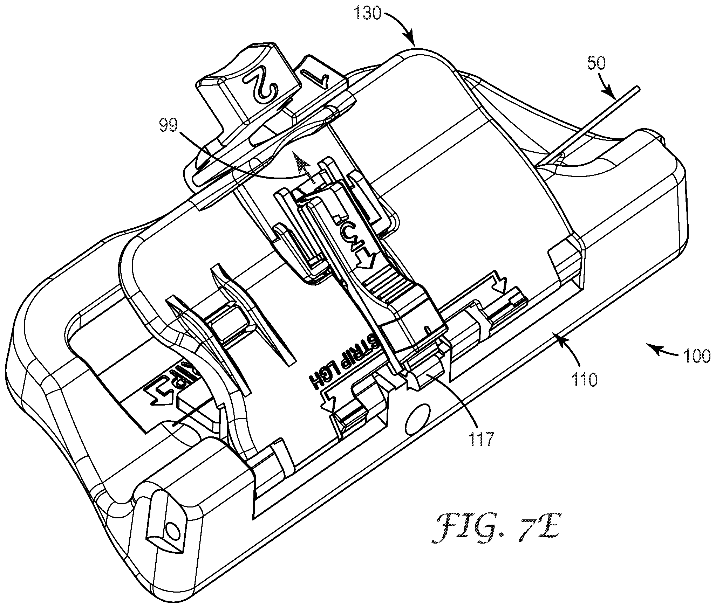

Device 100 can further include a first clamp 170 disposed on one side of mandrel 120 (shown in a closed position in Fig. 7B and in an open position in Figs. 1B and 7A). The first clamp applies a first holding force that is configured to clamp onto the buffer coated portion 54 (Fig. 7B) of the optical fiber 50. The first clamp is capable of applying a first holding force of about 1 kilogram to grip the buffer coated portion of the optical fiber.

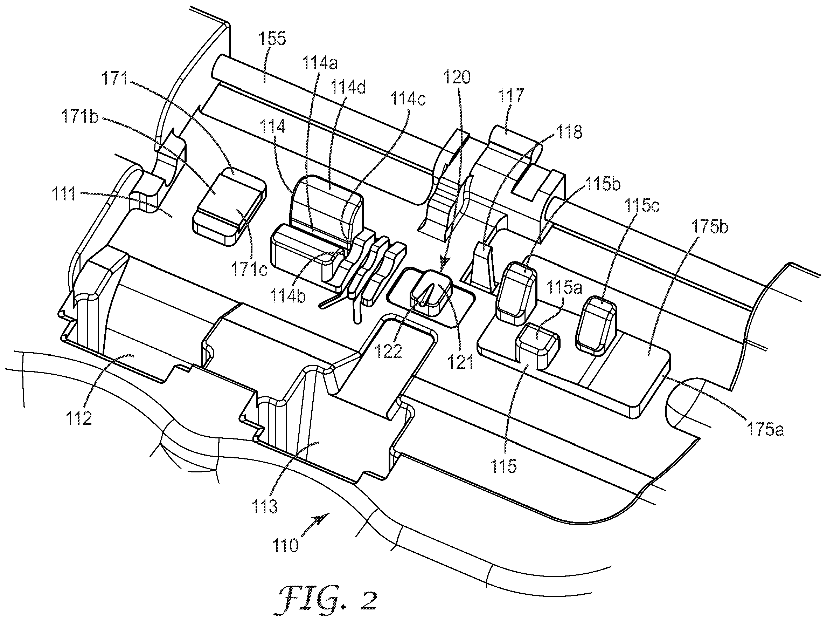

Referring to Figs. 1A-1C and 2, first clamp 170 includes a first base plate 171 having a depression 171a formed therein to accommodate a gripping pad 171b and a first clamp arm 173 that is rotatably attached to the base of device 100 along hinge axis 151 via knuckles 152c. Each knuckle 152c includes a bore 153c formed therethrough to accommodate hinge pin 155. Knuckles 152c of the first clamp arm can be disposed between knuckles 152a, 152b of the cover and the base, respectively.

The first clamp arm 173 can include a depression (not shown) formed therein to accommodate a gripping pad 173b that is aligned with gripping pad 171b when the first clamp 170 is closed. The first clamp arm 173 can further include a latch disposed opposite knuckles 152c. The buffer coated fiber portion is locked in position when the first clamp arm is secured to the base such as by the insertion of latch 174 disposed on the first clamp arm into a latch receptacle 112 that is formed in the device base 110. In an exemplary aspect, gripping pads 171b, 173b for the first clamp can be in the form of an elastomeric pad that are adhesively bonded to the first base plate and the first clamp arm, respectively. In an alternative aspect, gripping pad 171b can be disposed directly on the work surface 111 of base 110.

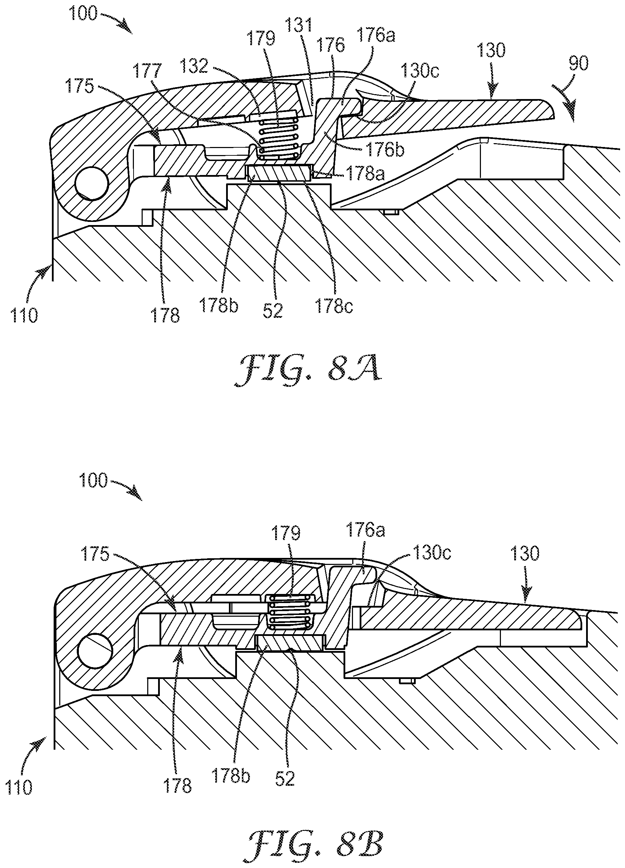

Device 100 can also include a second clamp disposed on the other side of the mandrel from the first clamp. The second clamp 175 clamps onto the bare glass portion of the terminal end of the optical fiber. Second clamp is shown in its open position in Figs. 1B, 7A and 7B and is shown in its closed position in Fig. 8B. The second clamp 175 includes a second base plate 175a and a clamp arm 178 that is rotatably attached to the base of device 100 along hinge axis 151 via knuckles 152d and resiliently coupled to cover 130 of the device. Each knuckle 152d includes a bore 153d formed therethrough to accommodate hinge pin 155. Knuckles 152d of the second clamp arm can be disposed between knuckles 152a, 152b of the cover and the base, respectively.

The second clamp arm 178 can include a depression 178a (Fig. 8A) formed therein to accommodate a gripping pad 178b that is aligned with second base plate 175a disposed on base 110 when the second clamp 175 is closed such that the bare glass portion is firmly held by a second holding force between gripping pad 178b that is aligned with second base plate. The second holding force to grip the bare glass portion of the optical fiber can be from about 0.49 N to about 1.65 N (about 50 g_{f} to about 170 g_{f}). In one exemplary aspect, a second holding force of about 1.47 N (about 150 g_{f}) was used which is significantly less than the 3.91 N - 4.89 N (400-500 g_{f}) required by conventional straight or pure tension cleavers.

In an exemplary aspect, the second base plate 175a can be formed of a rigid material, such as a rigid plastic material which can help minimize twisting or torsion on the optical fiber when the second clamp 175 is closed. In an exemplary aspect, the second base plate can be integrally molded with base 110 (as shown in Fig. 2) or the second base plate can be formed as a separate part that that is assembled onto the base via either a mechanical attachment means or via an adhesive. The gripping pad 178b can be in the form of elastomeric pad that can be attached to the second hinge clamp arm by an adhesive.

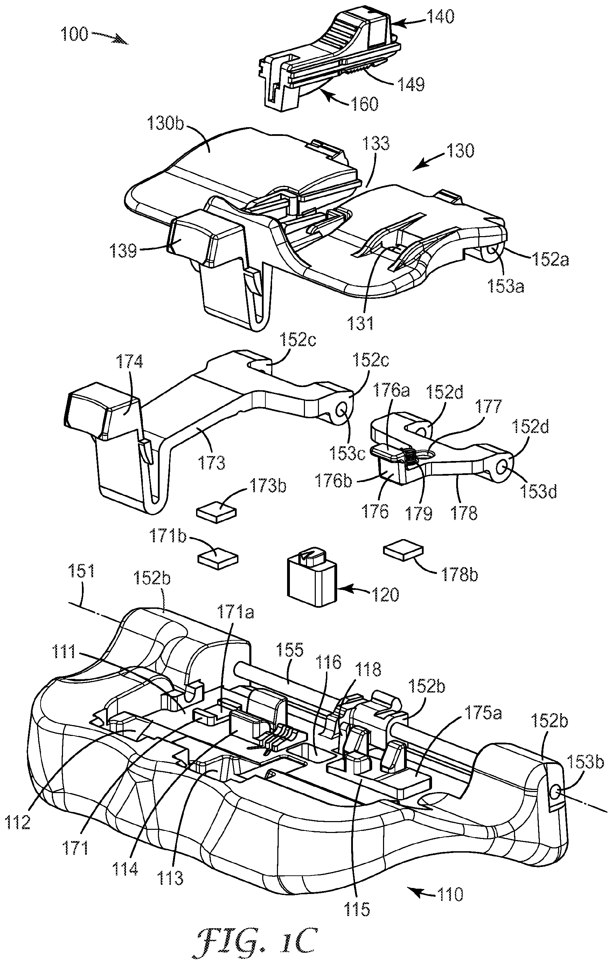

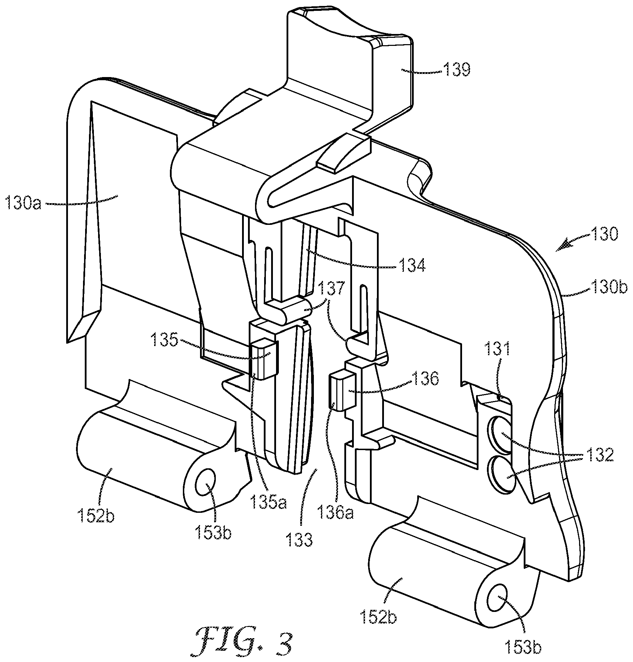

Second clamp arm 178 can include an L-shape extension 176 disposed at an end opposite knuckles 152d. The short arm 176a extends from long arm 176b of L-shape extension 176 and can be inserted through an opening 131 in cover 130 to attach the second end of the second clamp arm to the cover. The long arm 176b of L-shape extension 176 can be sufficiently long to allow the second clamp arm to move with respect to the cover. A spring 179 is disposed between cover 130 and second clamp arm 178 such that the second clamp arm is resiliently connected to the cover. The spring is fitted into hollows 177, 132 in the top surface of the second clamp arm 178 (Figs. 1C and 8A) and in the inside surface 130a of cover 130 (Figs. 3 and 8A), respectively. The spring can be inserted between the second clamp arm and the cover in a partially compressed state so that the second clamp arm is offset from the cover.

Referring to Figs. 8A and 8B, this offset allows the clamping surface 178c of gripping pad 178b to contact and grip the bare glass portion 52 of the optical fiber before the cover is completely closed. Fig. 8A shows the initial contact of clamping surface 178c of gripping pad 178b with the bare glass portion 52. The short arm 176a of L-shape extension 176 is resting on a lip 130c in hole 131 through cover 130. As the cover continues to be closed (indicated by directional arrow 90), the spring between the second clamp arm 178 and cover 130 is compressed until the cover is completely closed and latched as shown in Fig. 8B. The bare glass portion of the optical fiber is secured between the clamping surfaces 178c, 175b of gripping pad 178b and second base plate 175a, respectively, by a holding force that is sufficient to prevent slippage of the optical fiber before additional tension is applied to the optical fiber. Advantageously, the actuation mechanism of second clamp 175 and the use of a non-resilient second base plate 175a in the second clamp minimize twisting of the optical fiber when the exemplary cleaving device is closed.

The distance between the first and second clamps can be optimized to balance factors such as required strip lengths of fiber and buffer coatings, controlled tensioning of the optical fiber, and the desire for relaxed dimensional tolerances which also impacts the ease of use of the exemplary device. In an exemplary aspect, the distance between the first and second clamps can be in the range of about 40 mm and about 110 mm, preferably about 50 mm to about 60 mm for shorter cleave lengths. Smaller distances between the clamps provide for a very compact cleaving device but provide a much narrower process window. Larger distances enable a very robust process window with respect to the quality of the results achieved, but with a penalty of requiring long strip lengths, which impacts the ease of use of the device, and a larger overall device size.

In an exemplary aspect, the first clamp 170 can have a first clamping surface 171c disposed above the work surface 111 of the base 110 and the second clamp 175 can have a second clamping surface 175a disposed above the work surface of the base (as shown in Fig. 2) and wherein the first and second clamping surfaces define a zero tension plane disposed above the work surface. This plane represents that if the optical fiber were simply clamped by the first and second clamps, the optical fiber while being held by the clamps would not experience any additional forces due to either bending or axial tension.

Referring to Fig. 2, fiber guides 114, 115 can be provided on base 110 on either or both sides of the mandrel 120 to ensure proper positioning of the optical fiber for cleaving. In the embodiment shown in Figs, 1A-1C and 2, device 100 has a fiber guide disposed on both sides of the mandrel 120. For example, cleaving device 100 includes a first fiber guide 114 disposed between the first clamp 170 and the mandrel 120 that aligns the buffer coated portion of the optical fiber relative to the mandrel and a second fiber guide 115 disposed between the mandrel and the second clamp 175.

Referring to Figs 2 and 7A, the first fiber guide 114 can be configured as a generally U-shaped channel 114a wherein the channel of the fiber guide has a sufficient width to accommodate the buffer coated portion 54 (Fig. 7A) of the optical fiber. U-shaped channel 114a has first and second side walls 114b, 114c extending from the work surface 111 of base 110. The height of the side walls is greater than the diameter of the buffer coated portion of the optical fiber. In an exemplary aspect, the height of the side walls can be greater than several diameters of the buffer coated portion of the optical fiber. The high side walls help to ensure the proper alignment of the optical fiber in the exemplary device even if the optical fiber has some degree of curvature or curl due to its memory of being wrapped in a coil. In another exemplary aspect, the second side wall closer to the hinge of the device can be longer than the first sidewall and the upper portions of the sidewalls can be chamfered to facilitate placement of the optical fiber in the first fiber guide. Additionally, it can be desirable to make the second side wall of the first fiber guide such that the top surface of the second sidewall acts as a bearing stop surface 114d for the cover when the device is closed and the cover is latched.

The second fiber guide 115 is configured to accommodate the bare glass portion 52 of the optical fiber once the buffer coating has been removed. In an exemplary aspect, the second fiber guide is comprised of a plurality of staggered fingers 115a-115c that extend from the base. The distance between adjacent fingers is a little larger that the diameter of the bare glass portion. The height of the vertical portion the side walls of fingers 115a-115c can be about 1 mm to about 2 mm. The high side walls help to ensure the proper alignment of the optical fiber in the exemplary device even if the optical fiber has some degree of curvature or curl due to its memory of being wrapped in a coil. In another exemplary aspect, the fingers 115b, 115c closest to the hinge can be longer than finger 115a and the upper portions the sidewalls of each finger can be chamfered to facilitate placement of the optical fiber in the first fiber guide. Additionally, it may be desirable to make at least one of fingers 115b, 115c high enough such that a top surface of one of these fingers acts as a bearing stop surface for the cover when the device is closed and the cover is latched. In an alternative aspect, the second fiber guide can be in the form of a continuous V-groove having vertical side walls at its base.

The first and second fiber guides can be integrally formed with the base (as shown in Fig. 2) or can be formed as separate parts that are assembled onto the base via either a mechanical attachment means or via an adhesive.

The mandrel 120 can extend from the work surface 111 of the base 110 and supports the optical fiber at the point of the cleave. In the exemplary device 100 described herein, mandrel 120 has a radiused surface 121. In an exemplary aspect, the radiused surface can comprise a cylindrical radius. In order to optimize the mandrel, the following factors can be considered. For example, if the radius of the mandrel is too small, a higher tensile force is applied to the optical fiber to overcome the formation of lip/roll-off and can generate hackle and/or misting. On the other hand, if the radius of the surface of the mandrel is too large, a more defined nick site and higher additional tensile force are required to initiate the cleave and can result in greater cleave angle variability than a mandrel having a smaller radius. In an exemplary aspect, the mandrel can be of at least about 3 mm in width and includes a radiused surface having a radius of about 13 mm to about 36 mm, preferably about 16 mm to about 18 mm. To make a flat or perpendicular cleave, the mandrel can be oriented orthogonal to the axis of the optical fiber. The mandrel may be oriented at an angle relative to the axis of the optical fiber in a device that is configured to produce an angled cleave on the end face of the optical fiber.

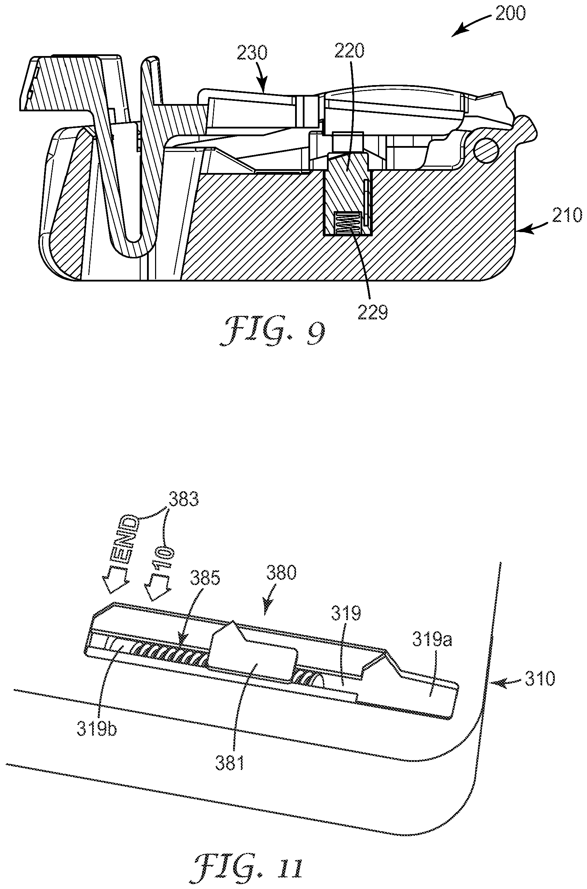

Mandrel 120 can be formed as a separate part that can be inserted into an opening 116 in base 110 as shown in Fig 1C or can be integrally formed with the base. The mandrel can include an inclined v-shaped slot 122 in the top surface of the mandrel to provide clearance for the flexible abrasive used to cleave the optical fiber. The mandrel can induce either a static bending force to the optical fiber in tandem with the fiber tensioners 135, 136 as in device 100 shown in Figs. 1B and 3, or can induce a dynamic bending force to the optical fiber as in device 100 shown in Figs. 9 which will be described below.

In an exemplary aspect, the radiused surface 121 of the mandrel 120 can be disposed between the work surface 111 of the base 110 and the zero tension plane defined by the clamping surfaces 171c, 175b of the first and second clamps 170, 175, respectively. In this aspect, no tension is placed on the optical fiber - the first and second clamps are only responsible for securing the optical fiber straight within the device. Thus, first and second clamps 170, 175 prevent slippage of the optical fiber when the optical fiber is later bent over the mandrel and an additional tensile force is applied. In an alternative aspect, the radiused surface of the mandrel can be disposed above the zero tension plane such that the first and second clamping surfaces are closer to the work surface of the base than the radiused surface of the mandrel.

In the latter case, the optical fiber will experience some degree of bending tension when the optical fiber is clamped into the device. Additional bending and/or axial tension may be added prior to cleaving.

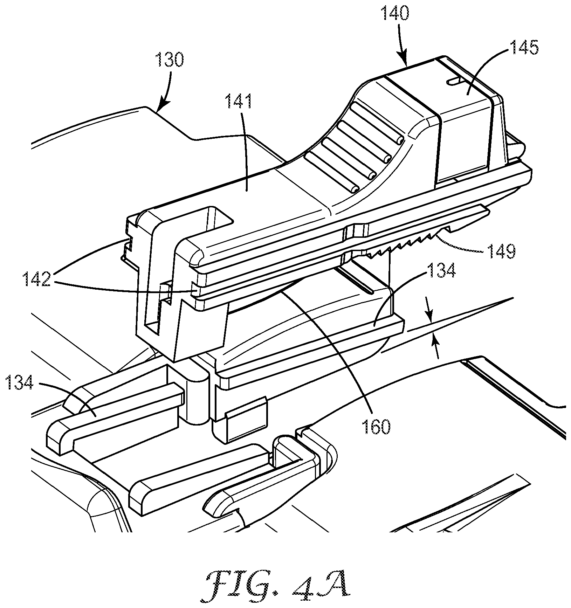

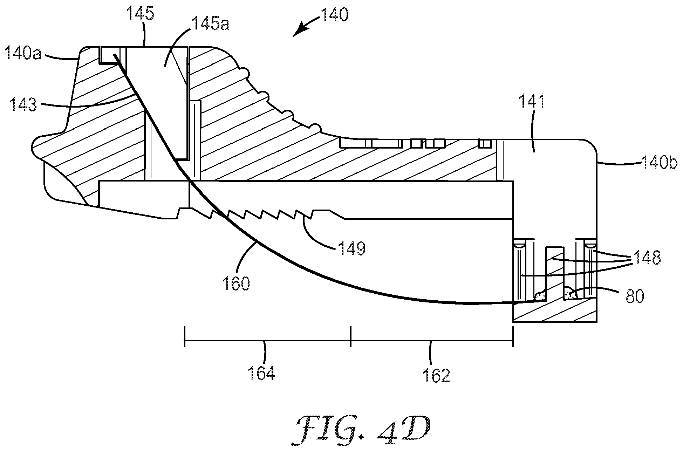

Referring to Figs. 1A-1C and Fig 3, cover 130 includes an inside surface 130a that is disposed opposite the work surface 111 of base 110 when the device 100 is in a closed and latched configuration. The cover further includes an external surface 130b disposed opposite the inside surface 130a, and a latch 139 configured to be received by a latch receptacle 113 (Figs. 1B and 2) disposed in the base 110 of the exemplary device 100 to lock the device in a closed configuration for cleaving. The cover can include a slot 133, preferably disposed along the centerline of the cover and generally perpendicular to the hinge axis 151. Slot 133 is configured to allow the shuttle to be slideably attached to the cover. In an exemplary aspect, the slot can include a pair of guide rails 134 disposed on the inside walls of the slot. The guide rails control the sliding movement of the shuttle relative to the cover. In an exemplary aspect, the guide rails 134 can be parallel to the inside surface of the cover. In an alternative aspect, the guide rails 134 can be inclined relative to the inside surface of the cover as shown in Figs. 3 and 4A. Inclining the guide rails can increase the vertical tolerances of the exemplary device 100 by allowing the shuttle to travel in both a downward as well as a lateral direction. For example, inclining the guide rails by 5° allows the shuttle to travel downward an extra 0.26 mm - 0.3 mm making it easier for the flexible abrasive material 160 (e.g. a diamond coated wire or filament) to strike the top surface of the optical fiber with a low angle portion 162 of the flexible abrasive as will be described in more detail below in reference to Fig. 4D.

A pair of spring fingers 137 can be disposed on one or both sides of the slot to provide some resistance to the shuttle's movement so that the shuttle will not be actuated prematurely and/or so the shuttle will not move around arbitrarily when it is not in use.

To induce the bend and tensile forces on the optical fiber, device 100 includes a first fiber tensioner 135 extending from an inside surface 130a of the cover 130 on a longitudinal side of the slot 133 such that the first fiber tensioner will be disposed between the first clamp and the mandrel when the device is in its closed configuration, and a second fiber tensioner 136 disposed on a second longitudinal side of the slot such that the second fiber tensioner will be disposed between the mandrel and the second clamp when the device is in its closed configuration. The first fiber tensioner 135 has a first contact surface 135a and the second fiber tensioner 136 has a second contact surface 136a. The first and second fiber tensioners can be in the form of rectangular columns that extend from the inside surface of the cover. The first and second fiber tensioners 135, 136 displace the fiber downward, and thereby exert a tensile force on the optical fiber on either side of the mandrel bending the bare glass portion of the optical fiber over the mandrel. The tensioners exert the additional static tension that controllably minimizes the compressive region in the bottom of the optical fiber (i.e. the portion of the fiber near the mandrel). The first and second tensioners can be used to create a tension force of about 25 g_{f} to about 175 g_{f}, and preferably of about 80 g_{f} to about 120 g_{f}. For example, an effective tension force of around about 100 grams can be used in conjunction with a 16 mm mandrel. In an exemplary aspect, the first and second fiber tensioners extend from the inside surface of the cover by the same amount (i.e. the first and second fiber tensioners can be of the same length). In an alternative aspect the first and second fiber tensioners can have different lengths which is contemplated for creating approximately 5 - 10° angled cleave end faces on optical fibers.

When the cover is disposed in a closed and latched position, the contact surfaces of the first and second fiber tensioners will be closer to the work surface of the base than the radiused surface of the mandrel.

In an exemplary embodiment of the device, the first and second fiber tensioners exert a downward force on the top surface of the optical fiber on either side of the mandrel after the first and second clamps exert a holding force on the optical fiber.

As mentioned above, device 100 further includes a shuttle 140 disposed in guide rails 134 in cover 130. The guide rails can be formed so that shuttle 140 travels substantially perpendicular to the axis of the optical fiber. A cam stop 117 (Fig. 2) is disposed on the base of the device at the open end of slot 133 in the cover when the cover is attached to the base. The cam stop ensures that shuttle 140 is not inadvertently removed from the slot in the cover during or after a cleaving process, as well as providing a means of resetting the shuttle to its pre-cleave position after a cleave is made and is described in more detail below.

Referring to Figs. 4A-4E, shuttle 140 includes a body 141 that houses and holds a flexible abrasive material 160 used to introduce a flaw on the top surface of an optical fiber during cleaving. In an exemplary aspect, the flaw may be introduced with a simple lateral movement of the abrasive material across the bare glass portion of the optical fiber. The body 141 of the shuttle has a groove 142 formed on each longitudinal side of the body that engage with the guide rails 134 disposed in the cover 130 (Fig. 3) of the exemplary cleaving device. The lateral movement is due to the sliding of the guide rails in the grooves formed on the body of the shuttle. In the exemplary device, the flaw can be made while the optical fiber is strained in a controlled manner that includes both an applied bending force as well as an additional tensile force.

In a preferred aspect, the flexible abrasive material 160 comprises a flexible abrasive material, such as a filament (e.g., a metal wire) having an abrasive material coated (either sparsely or densely) on an outer surface or portion thereof. The abrasive material can be a conventional abrasive mineral, such as diamond particles, silicon carbide particles, or a similar material that is harder than glass. For example, in an exemplary alternative aspect, the flexible abrasive material can comprise a steel wire that is coated with diamond particles. In one example, the steel wire can have a diameter of about 140 µm, with diamond particles of about 20 µm in size. In other aspects, other sized wires can be utilized. Alternatively, the flexible abrasive material can be a piece of folded lapping film or other abrasive coated substrate. In an exemplary aspect, the lapping film can include a piece diamond or silicon carbide coated polyester.

In a preferred aspect, device 100 provides a cleave that is perpendicular (+/ - 3°, preferably +/- 2°) to the length of the optical fiber.

The flexible abrasive material can be secured to the shuttle at two points at either end such that there is a free-span of the flexible abrasive material between the fixed points. The flexible abrasive material can be attached to the shuttle such that the free-span of the abrasive material has a curved configuration as shown in Figs. 4A-4E or such that the free-span has a straight configuration between the fixed ends of the abrasive material. When the flexible abrasive material has a curved configuration, it can flex slightly as it comes into contact with the optical fiber during cleaving. Alternatively, the diamond coated wire can be fixed at one end and allowed to float at its opposing end by a restricting guide built into the shuttle.

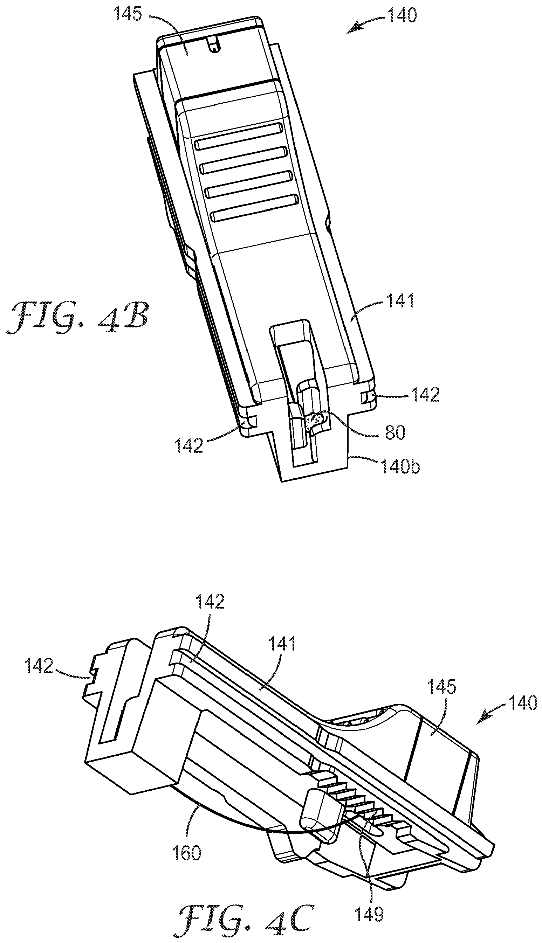

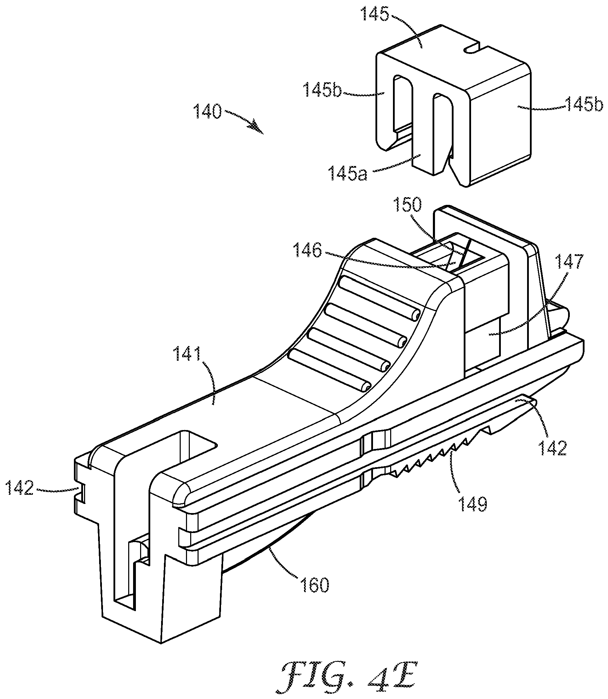

The flexible abrasive material 160 can be secured to the shuttle 140 by a mechanical connection mechanism, by an adhesive or both. In the exemplary shuttle shown in Figs. 4A-4E, a first end of the flexible abrasive material is held by a mechanical clip 145 and the second end is held by a drop of adhesive (e.g. a cyanoacrylate or epoxy adhesive). For example, the mechanical clip can include a wedge shaped central portion 145a and a pair of catch portions 145b disposed on either side of the wedge shaped central portion (see Figs. 4D and 4E). The flexible abrasive material can be captured between the wedge shaped central portion of mechanical clip 145 and an inclined wall portion 143 near a first side 140a of the shuttle 140. Each of the catch portions 145b can have a barbed projection near its distal end that can engage with an indent 147 formed on either side of body 141. The second end of the flexible abrasive material 160 can be adhesively connected near the second end 140b of the shuttle. For example, the second end of the flexible abrasive material 160 can be disposed between alignment members 148 formed near the second end of the shuttle and a drop of adhesive 80 applied to secure the abrasive material in place as shown in Figs. 4B and 4D.

Shuttle 140 can include a plurality of ratchet teeth 149 (Figs. 1C, 4A and 4C-4E) disposed on a lower surface thereof. The ratchet teeth are configured to interact with ratchet pawl 118 (Figs. 1B and 2) disposed in the base of device 100 to prevent the shuttle from slipping backward during the cleaving of an optical fiber.

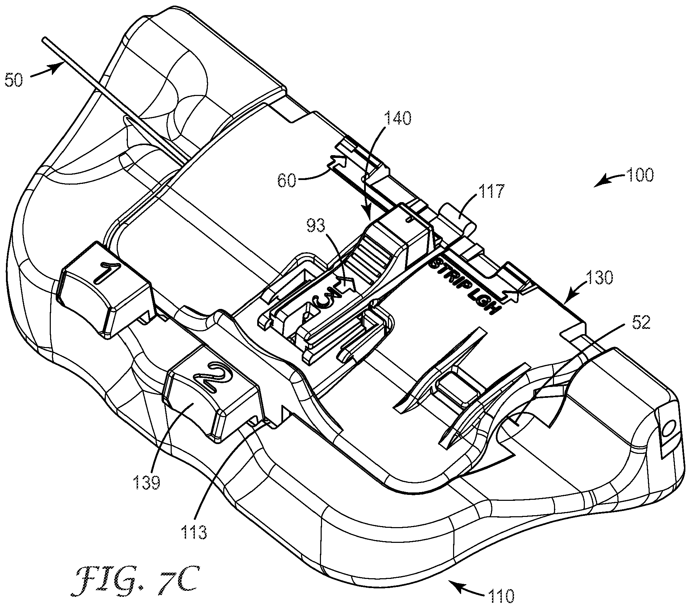

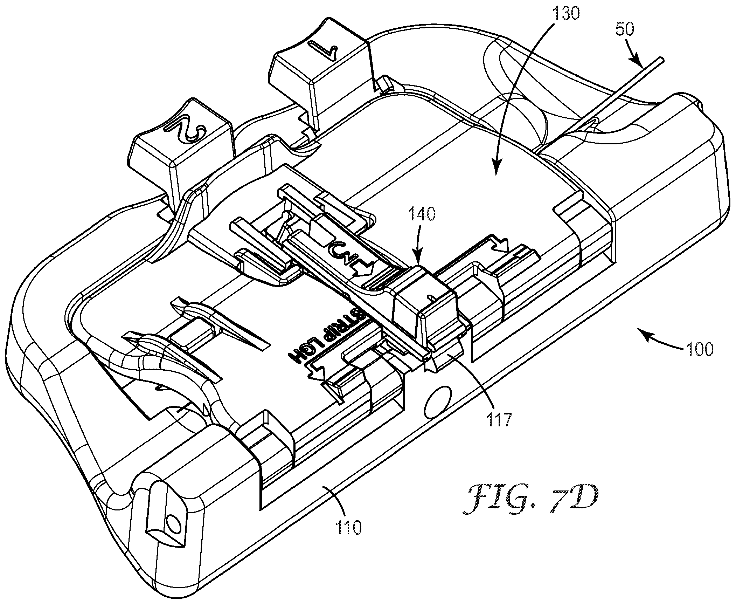

Moreover, shuttle 140 can include a curved contour on its upper surface, to allow the use of a finger pressing force to move the shuttle across the bare fiber portion of the optical fiber from a first (pre-cleaved) position (Fig. 7C) to a second (post-cleave) position (Fig. 7D) during the cleaving process. In a preferred aspect, the shuttle can be formed or molded from a polymer material or metal, while the flexible abrasive 160 can preferably comprise an abrasive-coated metal wire.

Cleaving of the optical fiber occurs when a flaw is introduced onto a top surface of the bare glass portion of the optical fiber under bending and axial tension. In an exemplary aspect, the flaw can be introduced by a simple lateral movement of a (preferably) flexible, coated abrasive material, such as abrasive coated wire, across the bare glass surface. In a preferred aspect, device 100 provides a substantially perpendicular cleave, within +/- 3° of perpendicular. Such perpendicularity can be sufficient for use or the cleaved end of the optical fiber can be polished after it has been mounted in an optical fiber connector.

The exemplary cleaving device, described herein, enables a simplified cleaving process. In operation, a cleaving process utilizing device 100 can take place as shown in Figs. 7A-7E. A fiber to be cleaved is stripped using a conventional technique. The stripping can leave an exposed glass portion of the optical fiber. In one aspect, the exposed glass portion has a length of about 40 mm to about 60 mm, more preferably from about 42 mm to about 50 mm. In an exemplary aspect, device 100 can further include a variety of helpful indicia scribed on the surfaces of the device. For example a guide can be included to make sure that a correct amount of buffer coating has been stripped off as is shown in Fig. 7C by indicia 60.

The stripped fiber is inserted into device 100 such that the buffer coated portion of the optical fiber is disposed on the first clamping surface 171c and in first fiber guide 114, as is shown in Fig. 7A. The bare glass portion of the optical fiber is disposed over the mandrel 120, in second fiber guide 115 and on second clamping surface 175b. The first clamp arm 173 of the first clamp is closed by moving the first clamp arm in the direction indicated by arrow 91 until the latch on the first clamp arm engages with latch receptacle 112 in the base 110 of the device as shown in Fig. 7A. Note that the indicia "1" on the latch of the first clamp reminds the craftsman that closing the first clamp arm of the first clamp is the first step in the cleaving process after the optical fiber has been stripped and properly aligned in the base.

Next the cover 130 is closed by moving in a direction indicated by arrow 92 in Fig. 7B. Note that the indicia "2" on the cover latch reminds the craftsman that closing the cover is the second step in the cleaving process. Just prior to fully closing, clamping surface 178c of gripping pad 178b of the second clamp 175 contacts the bare glass portion 52 of the optical fiber, as shown in Fig. 8A, providing a holding force that is sufficient to prevent slippage of the optical fiber before additional tension is applied to the optical fiber. As the cover continues to close, the contact surfaces of the first and second tensioners contact the bare glass portion of the optical fiber on either side of the mandrel. As the first and second tensioners move downward with the closing of the cover 130, they exert a downward force on the top surface of the optical fiber on either side of the mandrel bending the bare glass portion of the optical fiber over the mandrel as well as exerting additional static tension to minimize the compressive region in the glass of the optical fiber. This downward progression of the first and second tensioners ceases when cover 130 is completely closed and the latch 139 on the cover is secured in latch receptacle 113 in the base of device 100 as shown in Fig. 7C.

Fig. 7C shows shuttle 140 is in a pre-cleave position. Note that the indicia "3" on the shuttle reminds the craftsman that moving the shuttle to cleave the optical fiber is the third step in the cleaving process. In addition, an indicia arrow 93 can be formed on the shuttle to indicate the direction that the shuttle needs to be moved to execute the cleave. Shuttle 140 can be moved laterally across the cover so that the flexible abrasive material (i.e. an abrasive coated wire) contacts the top surface of the bare glass portion 52 of the optical fiber 50 to introduce a flaw in the surface. In an exemplary aspect, the flexible abrasive material contacts the top surface of the bare glass portion of the optical fiber at a low angle. The shuttle 140 is pushed in the direction indicated by arrow 93 until the front face of the shuttle contacts cam stop 117 disposed on the base 110 of the device 100. The cam stop serves as a stop to end the forward motion of the shuttle, as well as ensuring that shuttle 140 is not inadvertently removed from device during cleaving.

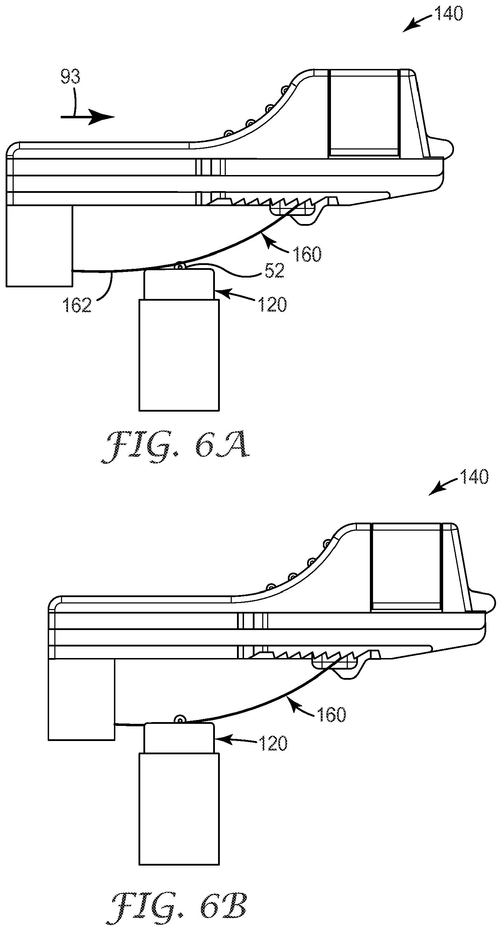

Referring to Figs. 4D and 6A and 6B, the flexible abrasive material can be attached to the shuttle at two points such that it has a curved configuration. Fig. 4D shows that a portion of the flexible abrasive material is disposed at a relatively low angle (i.e. a low angle portion 162 can be oriented at an angle of less than about 10°) and can have a portion, the high angle portion 164, having an angle of greater than 10°.

Figs. 6A and 6B show the contact of the flexible abrasive material with the bare glass portion of the optical fiber both before and after cleaving the optical fiber. As the shuttle is moved in the direction indicated by arrow 93, the low angle portion 162 of the flexible abrasive material contacts the top surface of the bare glass portion 52 to create a flaw that will create a crack that will propagate through the bare glass portion cleaving the optical fiber.

When the optical fiber has been cleaved, it may be released from the device by opening cover 130 and releasing the first clamp arm of the first clamp. In an exemplary aspect, cam stop 117 resets the shuttle to the pre-cleave position as cover 130 is opened. As the cover is opened, the front face of the shuttle slides on the surface of the cam stop which causes the shuttle to be moved in a direction indicated by arrow 93 until the shuttle rests in its pre-cleave position. The fiber shard can be disposed of using suitable safety precautions. In an alternative aspect, device 100 can also include a small shard disposal container formed on or attached to the base of the device. The first clamp can be opened and the optical fiber with its cleaved end can be removed from device 100.

Thus, a simple, compact, inexpensive cleaving device can be utilized to create a cleaved optical fiber having a cleave angle of about 0° (± 3°).

In addition to the embodiment described above, the device can further provide a dynamic strain mechanism to provide an additional, controlled stress to the optical fiber being cleaved. A cross-section of an alternative embodiment of an exemplary cleaving device 200 is shown in Fig. 9. Device 200 is similar to device 100 as described above, but rather than having a mandrel that is fixed to base, mandrel 220 can be spring loaded so that it provides dynamic tensioning to the optical fiber being cleaved. A spring 229 can be placed in an open cavity beneath mandrel 220 in the base 210 of device 200. In an exemplary aspect spring 229 enables the mandrel to apply a dynamic tension force of about 0.49 N to about 1.47 N (about 50 g_{f} to about 150 g_{f}) depending on the target force and the specific radius of the mandrel.

In an exemplary aspect, the exemplary cleaving devices described herein are designed to be inexpensive and disposable. Thus, the exemplary device does not require standard maintenance and calibration required by most conventional cleavers. The craftsman can simply discard an old cleaver and continue working with a brand new cleaver. To this end, it would be advantageous if the exemplary cleaver could indicate to the craftsman when it should be discarded and a new cleaver used.

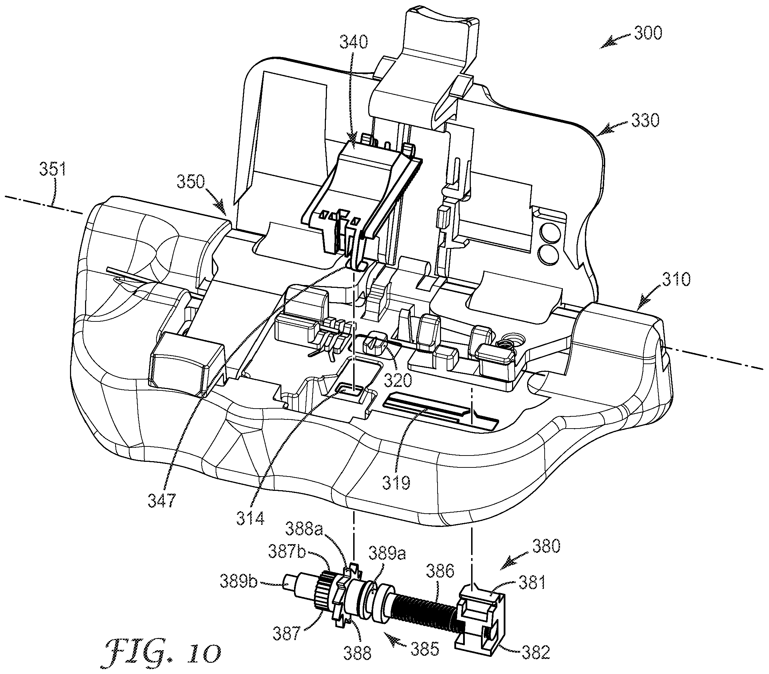

Figs. 10 and 11 show two views of a third embodiment of an exemplary cleaving device 300 that includes a service life indicator disposed in the base. Fig. 10 is an exploded view of device 300 and Fig. 11 is a detail view of a portion of the base of device 300 showing an exemplary service life indicator 380.

Device 300 is a modified version of device 100 describe earlier in reference to Figs 1A-1C. The structure and operation of device 300 can be essentially the same as described previously except as detailed below.

Device 300 includes a base 310 and a cover 330 rotatably connected to the base by a hinge 350, wherein the hinge defines a hinge axis 351. The base can includes an exemplary service life indicator 380 disposed on a surface of the base that is driven by an indicator drive mechanism 385 disposed within the base. A mandrel 320 is disposed within the base, as described previously, and a shuttle 340 that holds a flexible abrasive material is disposed in the cover such that it is positioned over the mandrel when the device is in a closed configuration. The flexible abrasive material is configured to contact the optical fiber and create a flaw or nick in a contact zone on a top surface of the optical fiber to initiate a crack which when it propagates through the optical fiber cleaves the optical fiber into two pieces. In addition, the shuttle actuates the indicator drive mechanism each time a fiber is cleaved (i.e. when the shuttle is moved from a pre-cleave position to a post cleave position).

Service life indicator 380 can include a pointer 381 that is attached to the indicator drive mechanism 385 disposed within a cavity (not shown) formed in the base via slot 319 through the base. The pointer will move a portion of the distance between the first end 319a of slot 319 to the second end 319b of the slot each time an optical fiber is cleaved or the shuttle 340 is moved from a pre-cleave position to a post cleave position. The pointer is coupled to the drive mechanism by a pointer support structure 382. The pointer support structure includes a body 382 having a threaded bore (not shown) disposed therethrough that engages with a threaded shaft 386 of drive mechanism 380. The pointer support structure 382 moves from the first end of the threaded shaft to the second end of the threaded shaft each time an advancing pawl 347 on the shuttle engages with the drive teeth 387b of a one way ratchet assembly 387 of drive mechanism 385.

The one way ratchet assembly 387 can be disposed on the second end of the threaded shaft such that when the one way ratchet assembly 387 rotates, the threaded shaft rotates. The one way ratchet assembly includes a drive wheel 388 when having a plurality of drive teeth 388a that engage with the advancing pawl 347 on the shuttle 340 to drive the threaded shaft and in turn resulting in the movement of pointer 381 and a locking wheel 387b having a plurality of locking barbs that prevent the backward rotation of the one way ratchet assembly.

Drive mechanism 385 can also include engagement features such as circumferential channel 389a and hub 389b that are configured to retain the drive mechanism within a cavity formed within base 310 of device 300. For example, hub 389b can be inserted into a corresponding recess disposed at one end of the cavity within base 310, and circumferential channel 389a can be snapped into a bracket disposed within the cavity, wherein the C-shaped cutout disposed in a free end of the bracket is sized to be slightly larger than the bottom of the circumferential channel. The drive mechanism is configured to rotate within the cavity so the recess and bracket should have sufficient clearance around the hub and the bottom surface of the circumferential channel to allow this motion occur when the one way ratchet assembly is engaged by the advancing pawl on the shuttle.

The advancing pawl 347 can be disposed on one of the back corners of the shuttle 340 such that it is disposed on the opposite side of the shuttle from the hinge when the shuttle is installed in the cover 130. When the cover is closed, the advancing pawl extends through on opening 314 in the base so that that the advancing pawn can engage with the one way ratchet assembly. In the exemplary embodiment shown in Fig. 10, the advancing pawl 347 is a T-shaped extension extending down form a back corner of the shuttle 340.

Finally, the service life indicator can include markings 383 disposed adjacent to slot 319 to show when the exemplary cleaving device is nearing the end of its planned life cycle. For example, when the pointer aligns with a first of the markings it may indicate that the device can be used for an additional 10 cleaves and when it reaches the second of the markings that the device is at the end of its planned life cycle and should be thrown away. In one exemplary aspect the one way ratchet assembly can lock when device 300 has reached the end of its planned life cycle so that the shuttle can no longer be actuated to cleave additional optical fibers. In an alternative embodiment, the markings adjacent to the slot can provide a count of the number of cleaves made by the device. For example, the exemplary device can be used to cleave from about 200 optical fibers to about 1000 optical fibers depending on the service life indicator, flexible abrasive material etc. employed in the device.

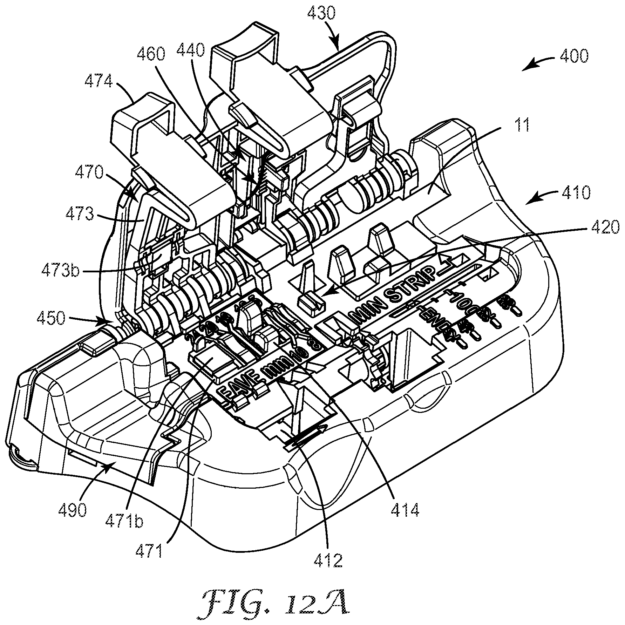

An alternative embodiment of an exemplary device 400 for cleaving optical fibers is shown in Figs. 12A-12C. Device 400 is a bladeless, portable fiber cleaving device that can be used in conjunction with a fiber holder assembly. Device 400 is similar to exemplary devices 100 and 300 described previously. The device tensions the optical fiber to permit cleaving with flexible abrasive material as described previously. The following description will focus on the new attributes of exemplary device 400 and rely on the prior description for similar features.

Device 400 includes a base 410 and a cover 430 rotatably connected to the base by a hinge 450, wherein the hinge defines a hinge axis. The base can include a work surface 411 defining a reference plane for the device. The cover 430 includes an inside surface that is disposed opposite the base's work surface when the device is in a closed configuration. A mandrel 420 is disposed within the base and a shuttle 440 that holds a flexible abrasive material 460 is disposed in the cover such that it is positioned over the mandrel when the device is in a closed configuration. The flexible abrasive material 460 is configured to contact an optical fiber and create a flaw or nick in a contact zone on a top surface of the optical fiber to initiate a crack as illustrated in Fig. 5. The crack will propagate through the optical fiber cleaving the optical fiber into two pieces. The exemplary device can be used to create a flat cleave or an angled cleave as required.

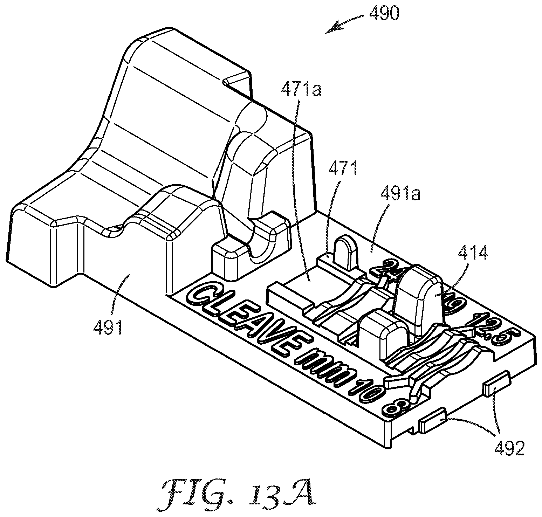

Referring to Figs. 12A-12C and 13A, device 400 can include an insert 490 that forms a portion of work surface disposed in a pocket 419 formed in base 410. Insert 490 includes a base portion 491 having an insert work surface 491a that is coplanar with the work surface of the base device and wherein the base portion has one or more projecting tabs 492 extending from the peripheral edge of the base portion. The projecting tabs can be inserted into receptacles 419b disposed within pocket 419 to secure the insert to the base 410 of device 400. The base 410 of device 400 can include insert catches 419a that extend a short way over pocket 419 to prevent insert 490 from lifting or shifting when device 400 is in use.

An interference latch 419c can be disposed at the bottom of pocket 419. The interference latch can be in the form of a spring arm with a small protruding knob extending from its top surface that extends above the bottom surface of the pocket. The protruding knob resides in a depression or against a positioning rib (not shown) formed on the bottom surface of base portion 491 of insert 490 to lock the insert within the pocket in the base of device 400. In order to extract the insert from the pocket, an initial removal force is applied to the insert which will cause the spring arm of the interference latch to flex enough so that the protruding knob can be extracted from the depression formed in the base or ride over a rib formed on the lower surface of the base.

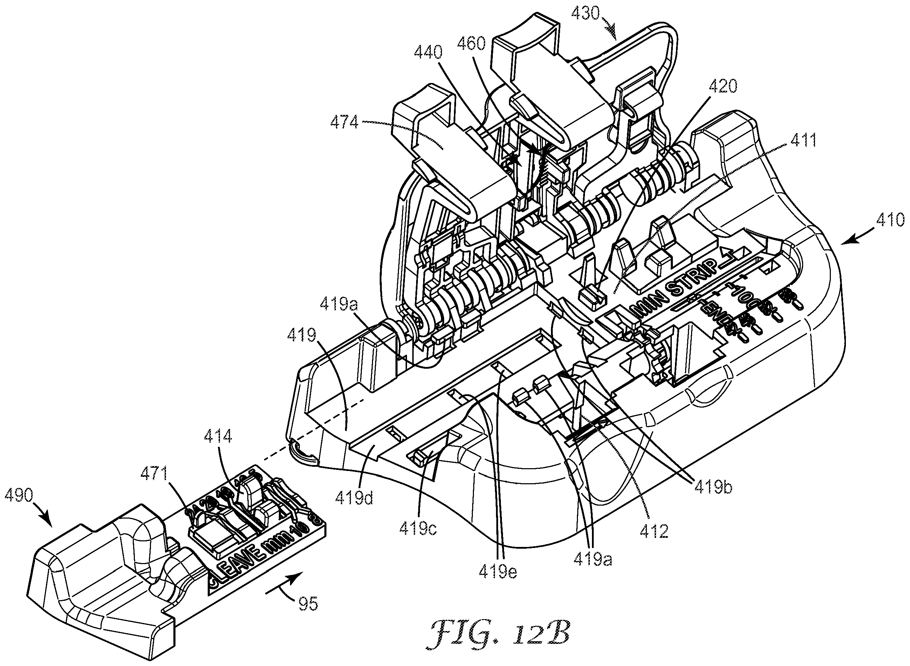

In an exemplary aspect, insert 490 can be slideably engaged with the base 410 as indicated by arrow 95 in Fig 12B. The front edge of the insert can be placed on the edge of pocket and moved toward mandrel 420 such that the top surface of base portion 491 slides beneath insert catches 419a until the projecting tabs 492 are fully seated in receptacles 419b and the interference latch 419c is engaged.

A first base plate 471 having a depression 471a formed therein to accommodate a gripping pad 471b can be disposed on a top surface of the base portion 491 of insert 490. A buffer coated fiber portion can be secured between gripping pad 471b disposed on the insert and gripping pad 473b disposed on first clamp arm 473 of first clamp 470 when the first clamp arm is secured to the base such as by the insertion of latch 474 disposed on the first clamp arm into a latch receptacle 412 that is formed in the base 410 of device 400. In an exemplary aspect, gripping pads 471b, 473b for the first clamp can be in the form of elastomeric pads that are adhesively bonded to the first base plate and the first clamp arm, respectively. In an alternative aspect, the gripping pad can be disposed directly on the insert work surface of the base portion of insert.

Referring to Fig. 12A-12B and 13A, insert 490 can also include a first fiber guide 414 disposed between the first base plate 471 of first clamp 470 and the mandrel 420 when the insert is installed in base 410 of exemplary device 400. The first fiber guide aligns the buffer coated portion of the optical fiber relative to the mandrel for cleaving. The first fiber guide 414 can be configured as a generally U-shaped channel wherein the channel of the fiber guide has a sufficient width to accommodate the buffer coated portion of the optical fiber. The U-shaped channel has first and second side walls extending from the insert work surface 411 of base 410. The height of the side walls is greater than the diameter of the buffer coated portion of the optical fiber. In an exemplary aspect, the height of the side walls can be greater than several diameters of the buffer coated portion of the optical fiber. The high side walls help to ensure the proper alignment of the optical fiber in the exemplary device even if the optical fiber has some degree of curvature or curl due to its memory of being wrapped in a coil. In another exemplary aspect, the second side wall closer to the hinge of the device can be longer than the first sidewall and the upper portions of the sidewalls can be chamfered to facilitate placement of the optical fiber in the first fiber guide. Additionally, it can be desirable to make the second side wall of the first fiber guide such that the top surface of the second sidewall acts as a bearing stop surface for the cover when the device is closed and the cover is latched as described previously.

Cleaving device 400 operated generally analogous to cleaving device 100 when insert 490 is installed in base 410.

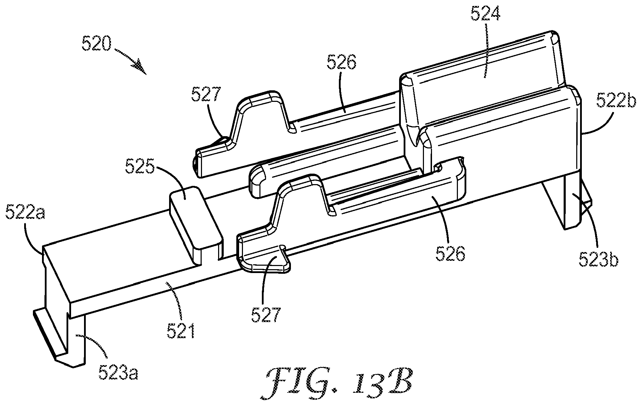

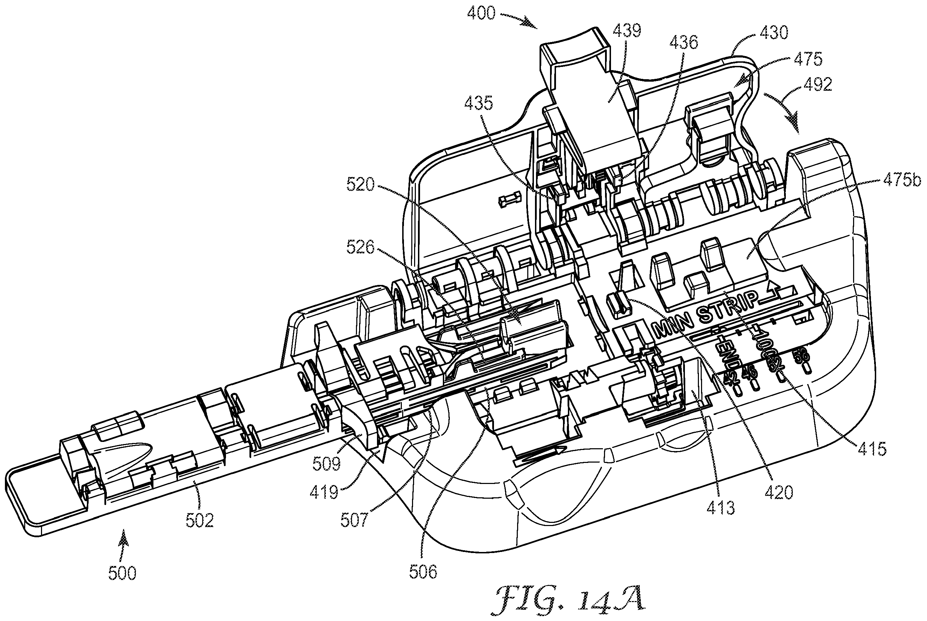

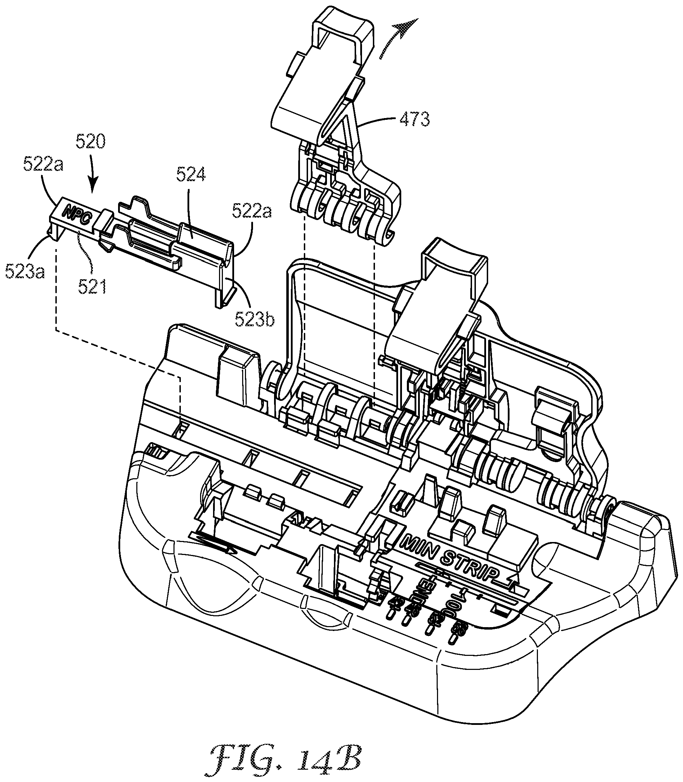

Having the removable inset 490 in device 400 provides greater flexibility for the exemplary low cost cleaving device described herein. Removal of insert 490 from pocket 419 in base 410 enables the exemplary cleaving device to accept a wide range of fiber holders in place of the first clamp. For example Fig. 14A shows device 400 configured to be used with an exemplary fiber holder assembly 500. Inserting a holder adapter 520 into pocket 419 allows fiber holder assembly 500 to be used with device 400. The holder adapter 520 is shown in Figs. 13B and 14B-14C, and the fiber holder assembly 500 is shown in Figs 13B and 14A.

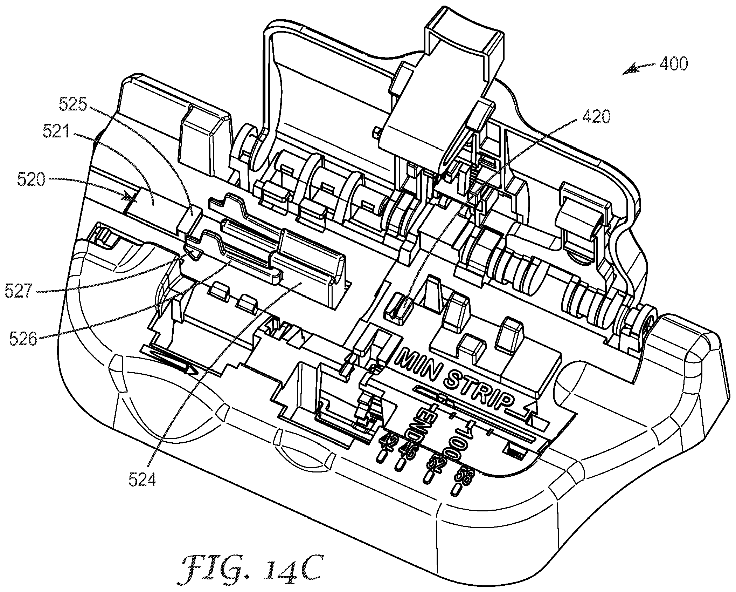

Holder adapter 520 includes a support portion 521 having a first end 522a and a second end 522b; first and second attachment hooks 523a, 523b extending from the bottom surface of the support portion at the first and second ends of the holder adapter, respectively; a first fiber guide 524 to position the buffer coated portion of the optical fiber relative to the mandrel for cleaving (see Fig. 14C); and a pair of positioning arms 526 to properly position and secure the fiber holder into device 400 during cleaving. Each of the positioning arms can include a locking tab 527 disposed on the end of the positioning arm that engages with one or more slots or depressions 507 formed in the sides of the rails 506 of the fiber holder assembly 500 to secure the fiber holder assembly 500 in device 400 during cleaving of the optical fiber held by the fiber holder assembly.

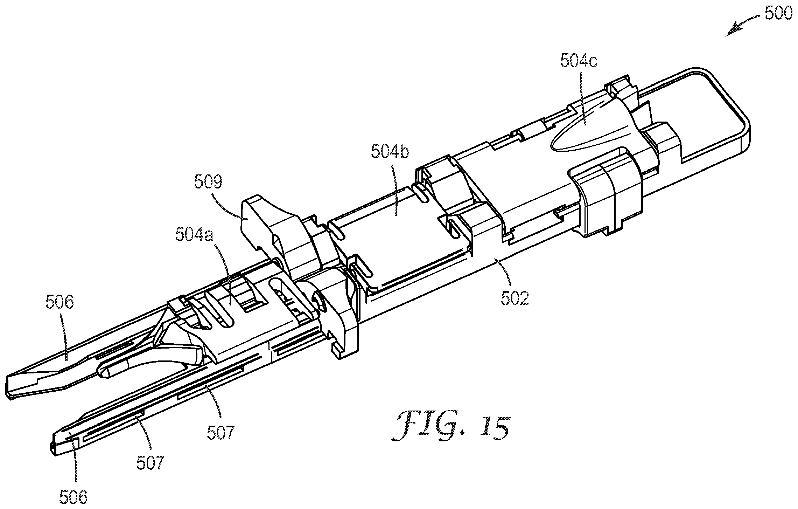

In one aspect, fiber holder assembly 500 has a fiber holder assembly base 502 that is configured to be slidably received in pocket 419 in the base 410 of device 400 and at least one fiber clamp rotatably mounted to the fiber holder assembly base, such as fiber clamps 504a, 504b and 504c, shown in Fig. 15. The fiber clamps are provided to support and temporarily secure an optical fiber during fiber cleaving and optionally throughout the optical fiber termination process with a fiber optic connector or splice. Each fiber clamp can be associated with one or more aligned fiber guides or channels to provide additional axial support of the fiber along a substantial distance of the holder assembly. Each of the fiber clamps 504a-504c can include a lid which is pivotally attached to the assembly base 502 that can be latched to provide the desired holding force. The fiber clamps 504a-504c can utilize the same or different clamping mechanisms depending on the amount of clamping force desired. Commonly owned U.S. Patent Nos. 7,280,733, and 8,452,150 describe exemplary fiber holders that can be used with the exemplary optical fiber cleaving device. In this exemplary aspect, the fiber clamp 504a is configured to clamp onto the buffer coated portion of the optical fiber and replaces clamp 470 in device 400. Thus, first clamp arm 473 is removed from device 400, as shown in Fig. 14B, when the device is being configured for use with a fiber holder assembly.

The fiber holder assembly 500 further includes a pair of stops or rails 506 extending from the fiber holder assembly base 502 near fiber clamp 504a and a buffer clamp actuator 509 slideably disposed between the rails. Each of the rails 506 can include one or more slots or depressions 507 formed in the sides for the rails that mate with the locking tabs on the end of the positioning arms of holder adapter 520 to properly position and secure the fiber holder into device 400 during cleaving of the optical fiber held by the fiber holder assembly. After cleaving, the fiber holder assembly can be removed from device 400 and used to hold the optical fiber in a known orientation through the remaining optical fiber termination process. Being able to maintain the cleaved fiber in a known orientation is especially advantageous when the device is used to produce an angled cleave on the terminal end of the optical fiber. The holder can then be used as a reference plane when inserting the angled cleaved fiber into a optical fiber splice or an optical fiber connector having a fiber or fiber stub having a complimentary angle cleaved end face.

To use the fiber holder assembly 500 with device 400, an optical fiber can be prepared prior to insertion in fiber holder assembly or after insertion in fiber holder assembly. The cable jacket can be removed using a conventional method to expose about 50 mm to about 100 mm, preferably 60 mm to about 90 mm of buffer coated fiber depending on the type of cable and the connector or splice to be used to terminate the optical fiber. In one aspect, the fiber can be inserted into the fiber holder and locked in place by closing the lids of clamps 504a-504c so that the terminal end of the optical fiber extends beyond the rails of the fiber holder assembly by about 60 mm. The buffer actuator 509 can be slid forward to the ends of the rails 506 to provide fiber support during stripping. The buffer coating can be stripped using a conventional mechanical fiber stripper to leave an exposed glass portion of about 40 mm to about 60 mm, depending on the connector or splice to be used to terminate the optical fiber. The exposed glass portion of the fiber can be wiped clean. The buffer actuator 509 can then be slid back to the position shown in Fig. 15. In one aspect, the buffer coating of the optical fiber is removed prior to inserting the optical fiber into the fiber holder assembly. Alternatively, the optical fiber can be stripped to leave an exposed glass portion of the appropriate length prior to placing the optical fiber into the fiber holder assembly.

Referring to Figs. 13B and 14A-14C, The fiber holder assembly 500 is then inserted into pocket 419 of device 400 until the locking tab disposed on the end of the positioning arms 526 of the hole adapter 520 engage with the slots or depressions 507 formed in the sides for the rails 506, the fiber holder assembly base 502 abuts against hard stop 525 formed on the support portion 521 of holder adapter and the interference latch 419c is engaged. Fig. 14A shows fiber holder 500 disposed in device 400, such that the bare glass portion of the optical fiber (not shown) will be disposed over the mandrel 420, in second fiber guide 415 and across second clamping surface 475b.

The cover 430 is closed by moving in a direction indicated by arrow 492 in Fig. 14A. As before, closing the cover actuates the second clamp 475. Just prior to fully closing, a holding force that is sufficient to prevent slippage of the optical fiber is applied before additional tension is applied to the optical fiber. As the cover continues to close, the contact surfaces of the first and second tensioners 435, 436 contact the bare glass portion of the optical fiber on either side of the mandrel 420. As the first and second tensioners move downward with the closing of the cover, they exert a downward force on the top surface of the optical fiber on either side of the mandrel bending the bare glass portion of the optical fiber over the mandrel as well as exerting additional static tension to minimize the compressive region in the glass of the optical fiber. This downward progression of the first and second tensioners ceases when cover is completely closed and the latch 439 on the cover is secured in latch receptacle 413 in the base of device 400.

The remainder of the cleaving process is analogous to that shown in Figs. 7C -7E and described in detail above. Briefly in summary, the shuttle is moved across the cover in the direction indicated by arrow 93 until the front face of the shuttle contacts the cam stop. Once the optical fiber has been cleaved, the fiber holder assembly holding the cleaved optical fiber can be removed by opening cover and disengaging the fiber holder assembly from the holder adapter. The cam stop resets the shuttle to the pre-cleave position as cover is opened.

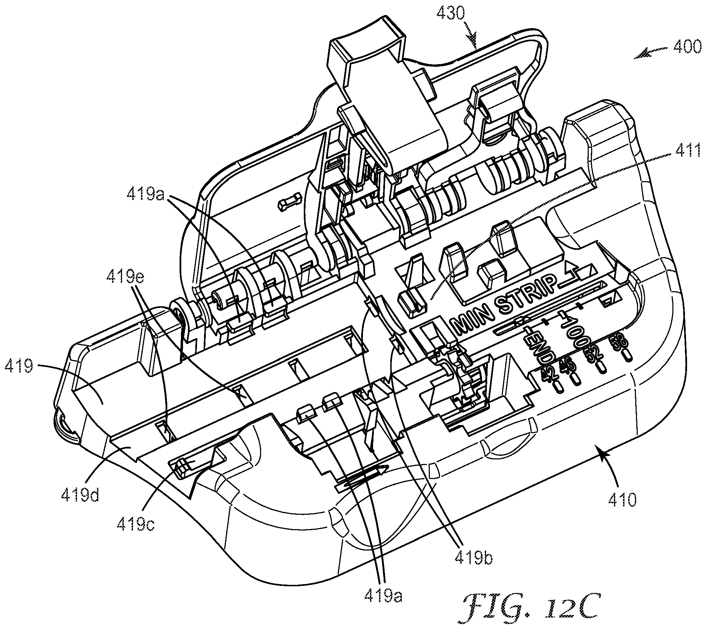

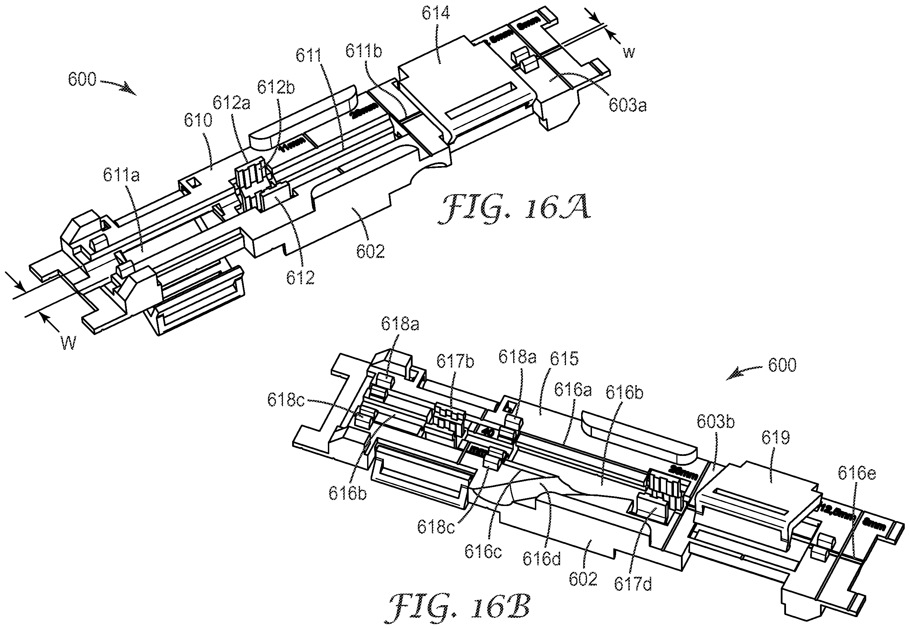

Figs. 16A and 16B show an alternative fiber holder assembly 600 that can be used in device 400 with an appropriate holder adapter. Fiber holder assembly 600 is configured to hold a wide range of cable sizes and shapes. Fiber holder assembly 600 has a fiber holder assembly base 602 having a first side 603a, shown in Fig. 16A, and a second side 603b, shown in Fig. 16B, The fiber holder assembly 400 is configured to be slidably received in pocket 419 in the base 410 of device 400 (shown in Fig. 12C). Depending on the type of optical fiber cable to be cleaved, fiber holder assembly can be placed into device 400 with either the first or the second side of the fiber holder assembly facing up thus increasing the number of types of optical fiber cables with which device 400 can be used.

The first side 603a of the fiber holder assembly base 602 has a stepped alignment channel 611 having a wide portion 611a characterized by a first width, W, at one end of the fiber holder assembly and a narrow portion 611b characterized by a second smaller width, w, at the second end of the fiber holder assembly, a first clamp 614 rotatably mounted to the fiber holder assembly base over the narrow portion 611b of the stepped alignment channel, and at least one cable jacket gripper 612 disposed over the wide portion of the stepped alignment channel. The cable jacket gripper 612 comprises two partition walls 612a rising above the edges of the wide portion of the stepped alignment channel having teeth 612b on their inner facing surfaces that are configured to bite into the cable jacket of larger diameter drop cables such as 5 mm round drop cables, or an optical fiber contained in a 5 mm buffer tubing,

The jacket of the optical fiber cable is removed from the terminal end of the optical fiber cable prior to positioning the optical fiber cable in the fiber holder assembly 600. The jacketed portion of the optical fiber cable is placed in the wide portion of the stepped alignment channel and the buffer coated portion is placed in the narrow portion of the stepped alignment channel with a portion of the buffer coated optical fiber extending beyond the end of base 602 of the fiber holder assembly. The first clamp is closed over the exposed buffer coated portion of the optical fiber cable. Once the cable is mounted in the channel, a portion of the exposed buffer coating at the terminal end of the optical fiber cable can be removed by a conventional method and the fiber holder assembly can be place in the pocket of device 400. The first clamp 614 of fiber holder assembly 600 replaces the first clamp of device 400 as described previously with respect to fiber holder assembly 500. The fiber can be cleaved as previously described.

The second side 615 of the fiber holder assembly base 602 has a plurality of alignment channels 616a-616d at first end of the fiber holder assembly base, a buffer coated fiber channel 616e at a second end of the fiber holder assembly base, and a second clamp 619 rotatably mounted to the fiber holder assembly base over the buffer coated fiber channel. The optical fiber cables or fibers enter the fiber holder assembly in the alignment channels and exit the fiber holder assembly in the buffer coated fiber channel.

The first alignment channel 616a is configured to accept 900 µm optical fibers and includes two sets of guide element 618a having a U-channel formed therein that is slightly larger than the 900 µm optical fiber placed therein. The 900 µm optical fiber makes a soft S-bend at the transition between alignment channel 616a and the buffer coated fiber channel 616e.

The second alignment channel 616b is configured to accept 1.6 mm round cables, 2 mm round cables, or 2 mm x 3 mm FRP cable and includes cable jacket gripper 617b disposed on either side of the second alignment channel. Cable jacket gripper 617b comprises two partition walls rising above the edges of the alignment channel 616b having teeth on their inward facing surfaces to grip appropriately sized optical cables. The jackets of 1.6 mm, 2 mm, and FRP cables are removed prior to placing them in optical fiber holder assembly 600. The jacketed portion of 1.6 mm round cables, 2 mm round cables, or FRP cable to be cleaved is placed in the second alignment channel 616b and the exposed buffer coated portion of the optical fiber cable is disposed in the buffer coated fiber channel 616e of fiber holder assembly 500.

The third alignment channel 616c is configured to accept 250 µm optical fibers and includes two sets of guide element 618c having a U-channel formed therein that is only slightly larger than the 250 µm optical fiber placed therein. The 250 µm optical fiber makes a soft S-bend at the transition between alignment channel 616c and the buffer coated fiber channel 616e.

The fourth alignment channel 616d is configured to accept 3 mm round cables. The fourth alignment channel has a gradual curved shape and a cable jacket gripper 617d disposed on either side of the fourth alignment channel. Cable jacket gripper 617d is disposed near the second clamp and includes two partition walls rising above the edges of the alignment channel 616d having teeth on their inward facing surfaces to grip appropriately 3mm drop cables optical cables. Fiber holder assembly 600 can hold a wide range of common cable types so that these cables can be reliably cleaved and terminated in the field. The jacketed portion of 3 mm round cables to be cleaved is placed in the fourth alignment channel 616d and the exposed buffer coated portion of the optical fiber cable is disposed in the buffer coated fiber channel 616e of fiber holder assembly 500.

Regardless of the type of optical cable disposed in fiber holder assembly 600, the cleaving process is analogous to the cleaving process described previously in relation when fiber holder assembly 500 is used with exemplary cleaver 400.

Also contemplated are cleaving devices of optical fibers which are capable of making a reproducible angled cleaves from about 5° to about 10° degrees from perpendicular or for about 95° to about 100° in a specific keyed orientation. One method of achieving angled cleaving may be through the introduction of controlled torsion or rotation of about 20°-30° to the optical fiber before cleaving while keeping all other parameters the same as disclosed above. Alternatively creating a non-symmetric stress profile in the bare glass portion of the optical fiber may be used to create an angled cleave. The non-symmetric stress profile could be created by displacing the longitudinal axis of the optical fiber so that the bare glass portion of the optical fiber crosses over the radiused surface of the mandrel at a diagonal or by angling the mandrel with respect to the longitudinal axis of the optical fiber. Another method of inducing an angled cleave may be to skew the angle of the mandrel relative to the work surface of the base and use two fiber tensioners of differing lengths on either side of the mandrel. Finally, combinations of these various methods can be combined to induce repeatable angled fiber cleaves.

Thus, the cleaver embodiments described herein can be utilized as a compact, low cost optical fiber cleaver suitable for field terminable connectors, mechanical splices and fusion splice devices, because the exemplary device does not require specially machined and/or precision milled components required by many conventional cleavers. The base, the cover, the first clamp arm of the first clamp, the second clamp arm of the second clamp, the shuttle, holder adapters, inserts and fiber holder assemblies are made of injection molded plastic keeping manufacturing costs low. In addition, the flexible abrasive material is of much lower cost than the precision cutting wheels used in most conventional cleavers.

Incorporation of the ability to utilize fiber holders with the exemplary cleaving devices enables its use with a wider variety of cable types. In addition, providing a suitable holder adapter enables the use of connector specific fiber holders to allow seamless handling of the optical fiber from fiber prep through the termination process which can be especially valuable when dealing with angle cleaved optical fibers.

In addition, the exemplary cleaving device minimizes the angular variability between cleaves by holding the optical fiber in an essentially linear orientation for low angle perpendicular cleaves, minimizing torsion effects on the optical fiber during clamping, and by ensuring that the flexible abrasive strikes the top surface of the optical fiber (i.e. within 30° of the apex of the bare glass portion or more preferably within 15" of the apex) when creating the flaw that will initiate the cleave. Finally, the fundamental technique of bending the optical fiber over a cylinder radius and adding a commensurate extra tension to minimize or negate the compressive stress region bent optical fiber, enables the glass fiber to propagate a crack creating a reproducible cleave angle from a miniscule nick site, with minimal damage regarding chips, hackle, misting and roll-off/lip.

The present invention should not be considered limited to the particular examples described above. Various modifications, equivalent processes, as well as numerous structures to which the present invention may be applicable will be readily apparent to those of skill in the art to which the present invention is directed upon review of the present specification, The invention is limited only by the appended claims.

## Claims

1. A device (100) to cleave an optical fiber (50), comprising:
a base (110) having a work surface;
a cover (130) rotatably connected to the base (110);
a mandrel (120) disposed in the base wherein the optical fiber (50) is arranged to be bent over a radiused surface of the mandrel (120) prior to cleaving;
a first clamp (170) disposed on one side of the mandrel (120) and a second clamp (175) disposed on the opposite side of the mandrel (120), wherein the first clamp (170) comprises a first clamping surface (171b; 171c) disposed on the base and a first clamp arm (173) rotatably connected to the base (110) and the second clamp comprises a second clamping surface (175a) disposed on the base (110) and a second clamp arm (178) resiliently connected to the cover (130), wherein the first and second clamps are arranged to provide a holding force to the optical fiber (50) so that it does not slip during cleaving; and
a shuttle (140) disposed in the cover over the mandrel (120), wherein the shuttle (170) includes a flexible abrasive material (160) configured to contact the optical fiber (50) and create a flaw on a top surface of the optical fiber (50) to initiate a crack in the optical fiber.

2. The device (100) of claim 1, wherein the optical fiber (50) comprises a bottom surface disposed opposite the top surface, wherein the bottom surface is in contact with the mandrel (120) during cleaving such that the bottom surface of the optical fiber (50) is in compression and the top surface is in tension.

3. The device (100) of claim 1, wherein the first clamp arm (173) of the first clamp (170) can be closed independent of the cover (130).

4. The device (100) of claim 1, wherein the second clamp arm (178) of the second clamp (175) is actuated as the cover (130) is being closed such that it exerts a holding force on the optical fiber prior the cover (130) being fully closed.

5. The device (100) of claim 1, wherein the first clamp (170) has a first clamping surface (171b; 171c) disposed above the work surface and the second clamp has a second clamping surface (175a) disposed above the work surface, wherein the first and second clamping surfaces define a zero tension plane disposed above the work surface of the base (110), and wherein radiused surface of the mandrel (120) is disposed between the work surface of the base (110) and the zero tension plane.

6. The device (100) of claim 5, further comprising a first fiber tensioner extending from an inside surface of the cover disposed between the first clamp (170) and the mandrel (120) and a second fiber tensioner disposed between the mandrel (120) and the second clamp wherein the first fiber tensioner has a first contact surface and the second fiber tensioner has a second contact surface.

7. The device (100) of claim 6, wherein the first and second fiber tensioners exert a downward force on the top surface of the optical fber on either side of the mandrel (120) resulting in a static axial tension within the optical fiber.

8. The device (100) of claim 1, wherein the first clamp (170) has a first clamping surface adjacent to the base (110) and the second clamp has a second clamping surface adjacent to the base (110) and wherein the radiused surface of the mandrel (120) is disposed higher than the first and second clamping surfaces such that the first and second clamping surfaces are closer to the work surface of the base than the radiused surface of the mandrel (120).

9. The device (100) of any of the preceding claims, wherein the shuttle (140) is disposed on guide rails in a slot in the cover (130).

10. The device (100) of any of the preceding claims, wherein the flexible abrasive material (160) comprises an abrasive coated wire.

11. The device (100) of any of the preceding claims, wherein the flexible abrasive material (160) is attached to the shuttle (140) at two points such that the flexible abrasive material (160) has a curved configuration.

12. The device (100) of any of the preceding claims, wherein the flexible abrasive material (160) contacts the top of the optical fiber (50) at a contact tangent angle of less than about 30°.

13. The device (100) of any of the preceding claims, wherein the mandrel (120) is resiliently disposed in the base (110) of the device such that the mandrel (120) exerts dynamic tension to the optical fiber (50) prior to cleaving.

14. The device (100) of any of the preceding claims, wherein the radiused surface of the mandrel (120) surface has a convex cylindrical radius.

15. The device (100) of any of the preceding claims, further comprising a service life indicator disposed in the base (110) of the device.

## Patentansprüche

1. Vorrichtung (100) zum Spalten einer Glasfaser (50), umfassend:
eine Basis (110) mit einer Arbeitsfläche;
eine Abdeckung (130), die drehbeweglich an die Basis (110) angeschlossen ist;
einen Dorn (120), der in der Basis angeordnet ist, wobei die Glasfaser (50) dazu eingerichtet ist, vor dem Spalten über eine gerundete Fläche des Dorns (120) gebogen zu werden;
eine erste Klemme (170), die auf einer Seite des Dorns (120) angeordnet ist, und eine zweite Klemme (175), die auf der entgegengesetzten Seite des Dorns (120) angeordnet ist, wobei die erste Klemme (170) eine erste Klemmfläche (171b; 171c), die an der Basis angeordnet ist, und einen ersten Klemmarm (173) umfasst, der drehbeweglich an die Basis (110) angeschlossen ist, und die zweite Klemme eine zweite Klemmfläche (175a), die an der Basis (110) angeordnet ist, und einen zweiten Klemmarm (178) umfasst, der federelastisch an die Abdeckung (130) angeschlossen ist, wobei die erste und zweite Klemme dazu eingerichtet sind, eine Haltekraft für die Glasfaser (50) bereitzustellen, so dass sie während des Spaltens nicht verrutscht; und
eine Pendelvorrichtung (140), die in der Abdeckung über dem Dorn (120) angeordnet ist, wobei die Pendelvorrichtung (140) ein flexibles, abrasives Material (160) umfasst, das dazu ausgelegt ist, die Glasfaser (50) zu berühren und einen Defekt an einer Oberfläche der Glasfaser (50) zu schaffen, um einen Riss in der Glasfaser auszulösen.

2. Vorrichtung (100) nach Anspruch 1, wobei die Glasfaser (50) eine Bodenfläche umfasst, die der Oberfläche entgegengesetzt angeordnet ist, wobei die Bodenfläche während des Spaltens mit dem Dorn (120) in Kontakt ist, derart, dass sich die Bodenfläche der Glasfaser (50) unter Kompression und die Oberfläche unter Zugspannung befindet.

3. Vorrichtung (100) nach Anspruch 1, wobei der erste Klemmarm (173) der ersten Klemme (170) unabhängig von der Abdeckung (130) geschlossen werden kann.

4. Vorrichtung (100) nach Anspruch 1, wobei der zweite Klemmarm (178) der zweiten Klemme (175) betätigt wird, wenn die Abdeckung (130) geschlossen wird, derart, dass er eine Haltekraft auf die Glasfaser ausübt, bevor die Abdeckung (130) vollständig geschlossen wird.

5. Vorrichtung (100) nach Anspruch 1, wobei die erste Klemme (170) eine erste Klemmfläche (171b; 171c) hat, die über der Arbeitsfläche angeordnet ist, und die zweite Klemme eine Klemmfläche (175a) hat, die über der Arbeitsfläche angeordnet ist, wobei die erste und zweite Klemmfläche eine Nullzugspannungsebene definieren, die über der Arbeitsfläche der Basis (110) angeordnet ist, und wobei die gerundete Fläche des Dorns (120) zwischen der Arbeitsfläche der Basis (110) und der Nullzugspannungsebene angeordnet ist.

6. Vorrichtung (100) nach Anspruch 5, darüber hinaus einen ersten Faserspanner, der sich ausgehend von einer innenliegenden Fläche der Abdeckung erstreckt, die zwischen der ersten Klemme (170) und dem Dorn (120) angeordnet ist, und einen zweiten Faserspanner umfassend, der zwischen dem Dorn (120) und der zweiten Klemme angeordnet ist, wobei der erste Faserspanner eine erste Kontaktfläche hat, und der zweite Faserspanner eine zweite Kontaktfläche hat.

7. Vorrichtung (100) nach Anspruch 6, wobei der erste und zweite Faserpanner eine abwärtsgerichtete Kraft auf die Oberfläche der Glasfaser auf beiden Seiten des Dorns (120) ausüben, was zu einer statischen axialen Zugspannung in der Glasfaser führt.

8. Vorrichtung (100) nach Anspruch 1, wobei die erste Klemme (170) eine erste Klemmfläche angrenzend an die Basis (110) hat, und die zweite Klemme eine zweite Klemmfläche angrenzend an die Basis (110) hat, und wobei die gerundete Fläche des Dorns (120) höher angeordnet ist als die erste und zweite Klemmfläche, derart, dass sich die erste und zweite Klemmfläche näher an der Arbeitsfläche der Basis befinden als die gerundete Fläche des Dorns (120).

9. Vorrichtung (100) nach einem der vorhergehenden Ansprüche, wobei die Pendelvorrichtung (140) auf Führungsschienen in einem Schlitz in der Abdeckung (130) angeordnet ist.

10. Vorrichtung (100) nach einem der vorhergehenden Ansprüche, wobei das flexible, abrasive Material (160) einen abrasiven, beschichteten Draht umfasst.

11. Vorrichtung (100) nach einem der vorhergehenden Ansprüche, wobei das flexible, abrasive Material (160) an zwei Punkten an der Pendelvorrichtung (140) befestigt ist, derart, dass das flexible, abrasive Material (160) eine gekrümmte Auslegung hat.

12. Vorrichtung (100) nach einem der vorhergehenden Ansprüche, wobei das flexible, abrasive Material (160) die Oberseite der Glasfaser (50) in einem Kontakttangenswinkel von weniger als ca. 30° berührt.

13. Vorrichtung (100) nach einem der vorhergehenden Ansprüche, wobei der Dorn (120) federelastisch in der Basis (110) der Vorrichtung angeordnet ist, derart, dass der Dorn (120) vor dem Spalten eine dynamische Zugspannung auf die Glasfaser (50) ausübt.

14. Vorrichtung (100) nach einem der vorhergehenden Ansprüche, wobei die gerundete Fläche der Fläche des Dorns (120) einen konvexen zylindrischen Radius hat.

15. Vorrichtung (100) nach einem der vorhergehenden Ansprüche, darüber hinaus einen Nutzungsdauerindikator umfassend, der in der Basis (110) der Vorrichtung angeordnet ist.

## Revendications

1. Dispositif (100) servant à couper une fibre optique (50), comprenant :
une base (110) présentant une surface de travail ;
un couvercle (130) connecté de manière rotative à la base (110) ;
un mandrin (120) disposé dans la base, sachant que la fibre optique (50) est agencée pour être pliée sur une surface arrondie du mandrin (120) avant la coupe ;
une première pince (170) disposée d'un côté du mandrin (120) et une deuxième pince (175) disposée du côté opposé du mandrin (120), sachant que la première pince (170) comprend une première surface de pinçage (171b ; 171c) disposée sur la base et un premier bras de pince (173) connecté de manière rotative à la base (110) et la deuxième pince comprend une deuxième surface de pinçage (175a) disposée sur la base (110) et un deuxième bras de pince (178) connecté de manière ferme au couvercle (130), sachant que la première et la deuxième pince sont agencées pour fournir une force de retenue sur la fibre optique (50) de telle sorte qu'elle ne glisse pas pendant la coupe ; et
une navette (140) disposée dans le couvercle au-dessus du mandrin (120), sachant que la navette (140) inclut un matériau abrasif flexible (160) configuré pour entrer en contact avec la fibre optique (50) et créer un défaut sur une surface supérieure de la fibre optique (50) pour initier une fissure dans la fibre optique.

2. Le dispositif (100) de la revendication 1, sachant que la fibre optique (50) comprend une surface inférieure disposée à l'opposé de la surface supérieure, sachant que la surface inférieure est en contact avec le mandrin (120) pendant la coupe de telle sorte que la surface inférieure de la fibre optique (50) soit en compression et la surface supérieure soit en tension.

3. Le dispositif (100) de la revendication 1, sachant que le premier bras de pince (173) de la première pince (170) peut être fermé indépendamment du couvercle (130).

4. Le dispositif (100) de la revendication 1, sachant que le deuxième bras de pince (178) de la deuxième pince (175) est actionné lorsque le couvercle (130) se ferme de telle sorte qu'il exerce une force de retenue sur la fibre optique avant que le couvercle (130) soit entièrement fermé.

5. Le dispositif (100) de la revendication 1, sachant que la première pince (170) présente une première surface de pinçage (171b ; 171c) disposée au-dessus de la surface de travail et la deuxième pince présente une deuxième surface de pinçage (175a) disposée au-dessus de la surface de travail, sachant que la première et la deuxième surface de pinçage définissent un plan à tension nulle disposé au-dessus de la surface de travail de la base (110), et sachant que la surface arrondie du mandrin (120) est disposée entre la surface de travail de la base (110) et le plan à tension nulle.

6. Le dispositif (100) de la revendication 5, comprenant en outre un premier tendeur de fibre s'étendant depuis une surface intérieure du couvercle, disposé entre la première pince (170) et le mandrin (120), et un deuxième tendeur de fibre disposé entre le mandrin (120) et la deuxième pince, sachant que le premier tendeur de fibre présente une première surface de contact et le deuxième tendeur de fibre présente une deuxième surface de contact.

7. Le dispositif (100) de la revendication 6, sachant que le premier et le deuxième tendeur de fibre exercent une force vers le bas sur la surface supérieure de la fibre optique de l'un ou l'autre côté du mandrin (120) résultant en une tension axiale statique à l'intérieur de la fibre optique.

8. Le dispositif (100) de la revendication 1, sachant que la première pince (170) présente une première surface de pinçage adjacente à la base (110) et la deuxième pince présente une deuxième surface de pinçage adjacente à la base (110) et sachant que la surface arrondie du mandrin (120) est disposée à une position plus élevée que la première et la deuxième surface de pinçage de telle sorte que la première et la deuxième surface de pinçage soient plus proches de la surface de travail de la base que la surface arrondie du mandrin (120).

9. Le dispositif (100) de l'une quelconque des revendications précédentes, sachant que la navette (140) est disposée sur des rails de guidage dans une fente dans le couvercle (130).

10. Le dispositif (100) de l'une quelconque des revendications précédentes, sachant que le matériau abrasif flexible (160) comprend un fil revêtu abrasif.

11. Le dispositif (100) de l'une quelconque des revendications précédentes, sachant que le matériau abrasif flexible (160) est attaché à la navette (140) en deux points de telle sorte que le matériau abrasif flexible (160) présente une configuration courbe.

12. Le dispositif (100) de l'une quelconque des revendications précédentes, sachant que le matériau abrasif flexible (160) est en contact avec le haut de la fibre optique (50) selon un angle tangent de contact inférieur à environ 30°.

13. Le dispositif (100) de l'une quelconque des revendications précédentes, sachant que le mandrin (120) est disposé de manière ferme dans la base (110) du dispositif de telle sorte que le mandrin (120) exerce une tension dynamique sur la fibre optique (50) avant la coupe.

14. Le dispositif (100) de l'une quelconque des revendications précédentes, sachant que la surface arrondie du mandrin (120) présente un rayon cylindrique convexe.

15. Le dispositif (100) de l'une quelconque des revendications précédentes, comprenant en outre un indicateur de durée de service disposé dans la base (110) du dispositif.
